# EUROPÄISCHE PATENTSCHRIFT

(11) **EP 0 706 760 B1**
(45) Veröffentlichungstag und Bekanntmachung des Hinweises auf die Patenterteilung: **16.12.1998**
(21) Anmeldenummer: 95115016.8
(22) Anmeldetag: 24.09.1995
(51) Int. Cl.: A22B 1/00, B65G 47/244, B65G 15/12

(54) **Einrichtung zum Fördern von Tieren**
Apparatus for conveying animals
Installation pour convoyer des animaux

(30) Priorität: 10.10.1994 CH 3040/94
(43) Veröffentlichungstag der Anmeldung: 17.04.1996
(73) Patentinhaber: PETER FUCHS TECHNOLOGY GROUP AG, 8452 Adlikon (CH)
(72) Erfinder: Fuchs, Peter, CH-8452 Adlikon (CH)
(74) Vertreter: Frei, Alexandra Sarah

(56) Entgegenhaltungen:
- EP-A- 0 255 261
- EP-A- 0 422 312
- AU-D- 571 286
- FR-A- 2 277 751
- TRANSACTIONS OF THE ASAE, Bd. 20, ST. JOSEPH (MI) USA, Seiten 571-574, GIGER, JR. 'Equipment for low-stress, small animal slaughter'
- J. AGRIC. ENGINEERING RES., Bd. 41, 1.September 1988 - 31.Dezember 1988 LONDON GB., Seiten 327-338, TEMPLE GRANDIN 'Double rail restrainer conveyor for livestock handling'

## Beschreibung

Die Erfindung betrifft ein Verfahren und eine Einrichtung zum Lasterfördern und im speziellen betrifft sie ein Förderverfahren mittels einer tiergerechten Fördereinrichtung, wie sie in den Patentansprüchen offenbart ist.

Mechanische Förderer mit endlosen Lastoberflächen werden für die vielfältigsten Zwecke eingesetzt und dienen unter anderem auch zum Kolonnenfördern von Lasten, wie das Gewicht von Tieren und Menschen. Solche Fördereinrichtungen können Rutschbahnen sein, es können Rollbänder sein, es können aber auch Skilifte sein.

Speziell zum tiergerechten Fördern ist von Giger et al. eine Gliederschiene entwickelt worden, bei welchem Kälber und Schafe auf einer Doppelschiene transportiert werden (Transactions of the ASAE 1977, 20, 571). Bei dieser Lastförderung verharren die Tiere auf den Gliedern der Doppelschiene auf dem Bauch liegend, sie haben keinen Bodenkontakt mit den Füssen mehr und werden durch die Wand führend gehalten vom Förderkanal bewegt. Diese Förderstellung fixiert die Tiere weitgehend und dieses Fördern erfolgt unter geringem Stress. Die Fördereinrichtung wird daher in Schlachthäusern zum Fördern von Schlachrvieh auf die Schlachtbank verwendet.

Ein Nachteil eines Förderns mittels gegliederter Doppelschiene besteht insbesondere im schwierigen Aufsteigen der Tiere auf die Doppelschiene. Um diesen Nachteil zu beheben, zeigt Grandin eine Weiterentwicklung auf, bei der die Tiere über einen helfenden Beinspreizer auf die Doppelschiene aufsteigen (J. agric. Engng. Res 1988, 41, 327). Diese Fördereinrichtung eignet sich aber nicht zum unbegleiteten, automatischen Aufsteigen der Tiere. Beispielsweise ist schwerlich erkennbar, wie die Tiere ohne Zuführhilfen auf den Beinspreizer springen. Es ist schwerlich zu erkennen, ob sie dazu geschoben oder gezogen werden. Ein eindeutiger Hinweis, dass beim Aufsteigen Schwierigkeiten auftreten, ist dadurch gegeben, dass das Überspringen des Beinspreizers durch den Einbau einer schräg abfallende Decke oberhalb des Beinspreizers verhindert wird. Hochspringende Tiere werden somit von der Decke reflektiert. Die Notwendigkeit einer solchen restriktiven Zuführhilfe zeugt vom Auftreten von Stress- und Angstzuständen der Tiere bei Benutzung dieser Fördereinrichtung.

Das Dokument AU-A-571'286 zeigt eine Vorrichtung zum unbegleiteten, automatischen Fördern von Tieren, bei welcher Tiere in einem Förderkanal in Kolonnen auf einem Laufband stehend transportiert werden. Die Tiere werden von Schiebern in den Förderkanal gestossen, das Laufband weist in der Höhe verstellbare Beinspreizer zur Fixierung der Tiere auf.

Hier setzt die Erfindung ein. Sie hat sich zum Ziel gesetzt, Förderverfahren mittels einer tiergerechten, insbesondere stress- und angstfreien Fördereinrichtung zu schaffen. Das Ziel der Erfindung besteht darin, die Lebensfreude von Tieren bei Benutzung der Fördereirrichtung in keiner Weise zu trüben. Das Vieh soll mittels dieser Fördereinrichtung in eine weitgehend fixierte Stellung bringbar sein. Ferner hat sich die Erfindung zum Ziel gesetzt, einen weitgehend automatisierten Betrieb, d.h. einen Betrieb ohne manuelle Zuführung von Tieren auf Fördermittel der Fördereinrichtung zu ermöglichen.

Diese Aufgaben werden durch die Erfindung, wie sie in den Patentansprüchen definiert ist, gelöst.

Die Idee der Erfindung besteht im Vermeiden der Ursachen von Stress- und Angstsituationen bei zu fördernden Tieren. Um Stress- und Angstsituationen zu vermeiden wird das Fördern von Tieren auf natürliche Verhaltensmuster der Tiere abgestimmt. Genauso wie beispielsweise die Breite von Latenförderbändern auf die Breite der zu fördernden Lasten abgestimmt ist, erfolgt das erfindungsgemässe Fördern von Tieren in auf die Grösse der Tiere und auf die Verhaltensmuster der Tiere abgestimmten Förderkanälen. Der Zutritt und der Transport der Tiere mittels der Fördereinrichtung erfolgt zwangfrei, ohne Einwirkung ängstigender oder stresserzeugender Zuführhilfen. Verschiedene, modular aneinanderfügbare Vorrichtungen bewirken eine weitgehende Fixierung der Tiere auf der Fördereinrichtung. Der Bewegungsraum der Tiere schränkt sich sequentiell von Modul zu Modul ein. Unerwünschte Positionen der Tiere werden dabei selbständig korrigiert. Als Förderhilfsmittel werden Reizelemente wie täuschende Spiegel, massierende Bürsten und beruhigende akustische Signalgeber eingesetzt.

Die erfindungsgemässe Fördereinrichtung setzt sich modular aus mehreren Vorrichtungen zusammen. Diese lassen sich wie folgt zusammenfassen:
a) Eine Dosiervorrichtung ermöglicht den Zutritt einzelner Tiere auf ein förderndes Dosierband zur Kolonnenförderung. Das Fördern erfolgt vorteilhalterweise in einem verspiegelten Förderkanal von der Schulterbreite der Tiere, wodurch ein selbständiges Kehren der Tiere im Förderkanal verhindert wird. Durch das Täuschen der Spiegel werden die Tiere beruhigt und abgelenkt. Einklappbare Laufsperren verhindern ein Vor- und insbesondere ein Rücklaufen der Tiere auf dem Dosierband im Förderkanal. Die Dosiervorrichtung isoliert die Tiere voneinander und schränkt ihren Bewegungsraum ein.
b) Eine Wendevorrichtung ermöglicht das selbständige Wenden von um 180° verkehrt ausgerichtet geförderter Tieren im Förderkanal. Nach Erkennen verkehrt ausgerichtet geförderter Tiere lassen sich diese über Wendemittel aus dem Förderkanal ausklinken und nach dem durch die Wendemittel geführten Wenden wieder lassen sie sich wieder in den Förderkanal einklinken. Beim Wenden werden die Tiere durch leichte tiergerechte Impulse von hinten und/oder von der Seiten sachte geschoben und die Tiere drehen sich um ihre Vorderbeine.
c) Eine Verzweigungsvorrichtung ermöglicht ein Zusammenfassen oder auch Aufteilen von Dosierbändern. Über Verzweigungsvorrichtungen lassen sich verschiedene Tierströme steuern. Tierströme lassen sich so auf Wartebänder lenken, Tierströme können andere langsamer geförderte oder auf längeren Dosierbändern geförderte Tierströme überholen, usw..
d) Eine Übergabevorrichtung ermöglicht ein Aufsteigen der dosiert geförderten Tiere auf Fussbänder und sie bewirkt ein Aufliegen der Tiere auf ein zwischen diesen Fussbändern laufendes Brustband. Die Fussbänder und das Brustband fördern die Tiere in einer Spreizbewegung derart auseinander. Im Bereich der Übergabestelle verlaufen beide auf der gleichen Förderhöhe bezüglich des Bodens, mit steigender Förderhöhendifferenz nähert sich das Brustband der Brust der auf den Fussbändern stehenden Tiere. Am Ende der Übergabevorrichtung, im Bereich der Abgabestelle, liegen die Tiere dann vollständig auf dem Brustband und verlieren den Kontakt zu den Fussbändern. Das Aufliegen der Tiere auf das Brustband wird von seitlichen Bürsten unterstützt, welche die Tiere bei der Übergabe massieren und diese so beruhigt und ablenkt.
e) Das Brustband fördert die Tiere vollständig auf der Brust liegend. Durch die Wände des Förderkanals werden die Tiere haltend geführt. Diese Förderstellung schränkt den Bewegungsraum der Tiere weiter ein, die Tiere sind nun weitgehend fixiert.

Die erfindungsgemässe Fördereinrichtung lässt sich vielfältig einsetzen. Die derart auf Brustbändern fixierten Tiere lassen sich auf Waagen oder zu Reinigungsstellen fördern, sie lassen sich zu ärztlichen Untersuchungen oder zu Impfungen etc. fördern, sie lassen sich aber auch zu Scherstellen für Schafe und auf Schlachtbänke für Schlachtvieh fördern. In diesem Zusammenhang sei erwähnt, dass sich diese Fördereinrichtung in vorzüglicher Weise mit der in der europäischen Patentschrift EP-422'312 offenbarten Betäubungsvorrichtung kombinieren lässt.

Anhand der folgenden Figuren werden das erfindungsgemässe Verfahren und die entsprechende Einrichtung detailliert erläutert. Hierbei zeigen:
- Fig. 1: zeigt eine Draufsicht eines Teils einer bevorzugten Ausführungsform einer erfindungsgemässen Fördereinrichtung mit Buchten und geschlossenen Zutrittstellen auf eine Dosiervorrichtung.
- Fig. 2: zeigt in Draufsicht einen Teil der bevorzugten Ausführungsform der Fördereinrichtung gemäss Figur 1, diesmal mit geöffneten Zutrittstellen von den Buchten auf die Dosiervorrichtung.
- Fig. 3: zeigt eine weitere Draufsicht eines Teils einer bevorzugten Ausführungsform von Dosiervorrichtungen der erfindungsgemässen Fördereinrichtung, wo Tiere in Kolonnen gefördert werden und sie zeigt einen Teil einer bevorzugten Ausführungsform einer Verzweigungsvorrichtung.
- Fig. 4a-4f: zeigen in einer Draufsicht einen Teil einer bevorzugten Ausführungsform einer Wendevorrichtung der erfindungsgemässen Fördereinrichtung, wo ein stehend gefördertes Tier um 180° gewendet wird.
- Fig. 5a-5f: zeigen in einer Seitenansicht einen Teil zweier bevorzugter Ausführungsformen einer Übergabevorrichtung der erfindungsgemässen Fördereinrichtung, wo ein auf einem Dosierband stehend gefördertes Tier auf ein Brustband gelegt wird.
- Fig. 6a-6d: zeigen in einer Ansicht einen Teil einer bevorzugten Ausführungsform einer Übergabevorrichtung der erfindungsgemässen Fördereinrichtung, wo ein auf einem Dosierband stehend gefördertes Tier auf ein Brustband gelegt wird.
- Fig. 7a-7c: zeigen in einer Seitenansicht schematisch einen Teil einer bevorzugten Ausführungsform einer Übergabevorrichtung der erfindungsgemässen Fördereinrichtung, mit Dosierband, Fussbändern und Brustband.
- Fig. 8a-8c: zeigen in einer Seitenansicht sowie in zwei Draufsichten schematisch einen Teil einer bevorzugten Ausführungsform einer Laufsperre und eines Laufsperrenbandes.
- Fig. 9a,9b: zeigen in Seitenansichten schematisch einen Teil einer weiteren bevorzugten Ausführungsform einer Laufsperre.

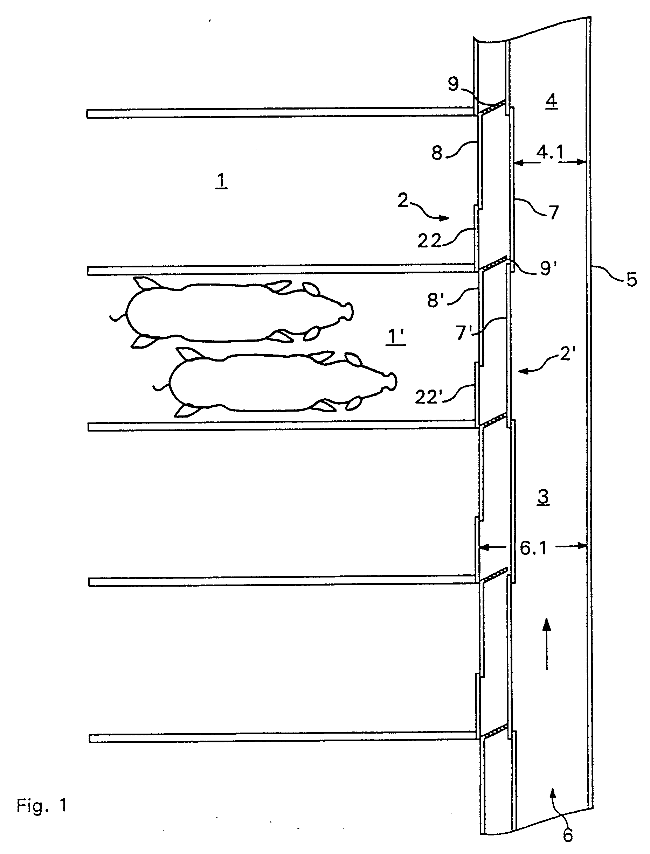

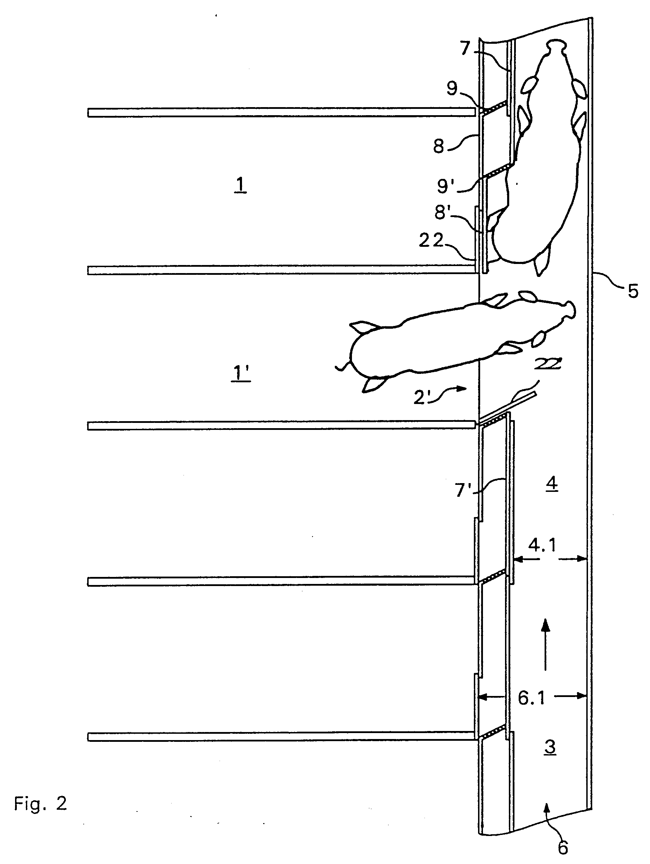

In den **Figuren 1 und 2** ist eine schematische Skizze einer bevorzugten Ausführungsform der Fördereinrichtung mit Zutrittstelle, Dosiervorrichtung und Dosierband zu sehen. Die Tiere, beispielsweise Schweine, befinden sich in vorteilhafterweise parallel zur Dosiervorrichtung 3 angeordneten verschliessbaren Buchten 1, 1'. Die Tiere haben über (nicht abgebildete) verschliessbare Einlässe Zugang zu den Buchten 1, 1' und haben über verschliessbare Zutrittstellen 2, 2' Zugang zum Dosierband 6 der Dosiervorrichtung 3. Bei geöffnetem Zugang der Zutrittstellen 2, 2' steigen die Tiere auf das Dosierband 6 der Dosiervorrichtung. Die Aufgabe der Buchten 1, 1' besteht im Aufbewahren der Tiere vor dem Aufsteigen auf die Dosiervorrichtung. Die Buchten sind für das erfindungsgemässe Verfahren nicht zwingend, das Verfahren und die Einrichtung funktionieren auch ohne solche Buchten.

Das Dosierband 6 ist ein handelsübliches, motorgetriebenes, einheitliches, endloses Rollenförderband, wie es beispielsweise auf Flughäfen zur Personenbeförderung eingesetzt wird. Es lässt sich für den Einsatz zur Tierförderung gegen Beschädigungen durch Hufe in einer besonders verstärkten Ausführungsform realisieren. Zum Erfüllen der strengen hygienischen Bedingungen bei der Tierhaltung lässt es sich die Dosiervorrichtung mit einer (nicht abgebildeten) Waschanlage ausstatten. Vorteilhafterweise weist das Dosierband 6 die Breite 6.1 auf, es ist also breiter als der Förderkanal 4 angelegt, der seinerseits eine Breite 4.1 aufweist. Diese Förderkanalbreite 4.1 ist tierspezifisch, denn die Tiere sollen erfindungsgemäss einzeln in Kolonne und durch die Kanalwände gehalten, gefördert werden. Das Fördern in Kolonnen erfolgt im Förderkanal 4 in Förderrichtung (gekennzeichnet durch den Förderpfeil). Das Dosierband 6 bewegt sich beispielsweise mit Geschwindigkeiten von 4m/sec in Förderrichtung vorwärts. Der Förderkanal 4 weist die Schulterbreite der Tiere auf, was ein selbständiges Kehren der Tiere und ein Verkeilen von nebeneinander im Förderkanal stehenden Tieren verhindert. Typische Breiten des Förderkanals 4 zum Fördern von Schweinen betragen 40 cm (Schulterbreite der Schweine). Nach oben kann der Förderkanal 4 offen sein, typische Höhen des Förderkanals betragen 150 cm. Diese Masse lassen sich je nach zu fördernder Tierart anpassen. Auch hier kann der Fachmann bei Kenntnis der vorliegenden Erfindung bei der Realisierung solcher Förderkanäle vielfältig varieren.

Um den Tieren den Zugang auf das Dosierband 6 zu erleichtern, haben die Tiere im Bereich der Zutrittstellen 2, 2' mehr Bewegungsraum als im Förderkanal 4 selbst. Das Bewerkstelligen von Bewegungsraum oder Zutrittsraum der Tiere ist in der Ausführungsform gemäss den Figuren 1 und 2 derart realisiert, dass die Zutrittstellen 2, 2' Schwingtüren 22, 22', Schiebetüren 8, 8' und Schiebewände 7, 7' aufweisen, die aufschwingbar und aufschiebbar sind, sodass diese Zutrittsmittel die Buchten 1, 1' verschliessen und öffnen können und dass diese Zutrittsmittel den Förderkanal 4 im Bereich der Zutrittstellen 2, 2' verschliessen und öffnen können. Die Schwingtüren 22, 22' und die Schiebetüren 8, 8' verschliessen und öffnen hierbei die Buchten 1, 1'. Die Schiebewände 7, 7' verschliessen und öffnen hierbei den Förderkanal 4 im Bereich der Zutrittstellen 2, 2'. Diese Zutrittsmittel 22, 22', 7, 7', 8, 8' der Zutrittstellen 2, 2' umschliessen im geschlossen Zustand einen Zutrittsraum, der den Tieren im geöffneten Zustand mehr Bewegungsraum zum Aufsteigen auf das Dosierband 6 erlaubt. Dieser Raum ist tierspezifisch, für Schweine besitzt er in der bevorzugten Ausführungsform gemäss dein Figuren 1 und 2 die Breite 6.1 des Dosierbands 6 und er weist die Länge von rund anderthalb Buchten 1, 1' auf. Vorteilhafterweise ist der der Zutrittsraum so gestaltet, dass die Tiere, spezifisch je nach Tiergrösse und Schrittlänge, nach Zutritt in den Zutrittsraum mit mindestens einem Bein auf dem Dosierband 6 stehen, sodass die seitliche Förderung in Förderrichtung startet. Der Zutrittsraum kann aber auch anders gestaltet sein, er kann grösser oder kleiner sein, er kann ein Vorraum zwischen den Buchten und dem Dosierband 6 sein (nicht abgebildete Ausführungsformen). Dem Fachmann stehen bei Kenntnis der vorliegenden Erfindung vielfältige Möglichkeiten der Realisierung von Zutrittsstellen offen.

Das Verfahren des Öffnens der Zutrittstelle 2' sieht man aus einem Vergleich der Figur 1 (geschlossene Bucht 1') mit der Figur 2 (offene Bucht 1'). Zuerst wird die Schiebewand 7' zum unteren Blattrand (in den Zutrittsraum der unten angrenzenden geschlossenen Bucht) geschoben, um somit den Förderkanal 4 im Bereich der Zutrittstelle 2' zu verbreitern. Daraufhin wird die Schiebetüre 8' zum oberen Blattrand (in den Zutrittsraum der oben angrenzenden geschlossenen Bucht 1) geschoben und dann wird die Schwingtüre 22' im Uhrzeigersinn aufgeschwungen, um somit die Bucht 1' zu öffnen und um Ztrittsraum vor den Buchten 1 und 1' zu schaffen. Die Tiere haben nun Zutritt auf das Dosierband 6 der Breite 6.1. Sie werden beispielsweise durch die innen verspiegelte Kanalwand 5 auf das Dosierband 6 gelockt. Sobald Tiere mit einem Bein oder mit mehreren Beinen auf dem Dosierband 6 stehen, werden sie in Förderrichtung bewegt. Damit die Tiere Zeit und Platz haben, auf diese Förderbewegung zu reagieren und vollständig auf das Dosierband 6 zu steigen, dehnt sich der Zutrittsraum der offenen Bucht 1' in den Zutrittsraum der in Förderrichtung angrenzenden geschlossenen Bucht 1 aus. Damit die Tiere nicht entgegen der Förderrichtung auf dem Dosierband 6 steigen, haben sie keinen Zutrittsraum vor der entgegen der Förderrichtung angrenzenden Bucht. Die geöffnete Schwingtüre 22' versperrt den Zutritt entgegen der Förderrichtung des Dosierbands 6. Damit die Tiere tiergerecht sanft in den Förderkanal 4 geführt werden, ist das in Förderrichtung gelegene Ende der Schiebetür 8' mit einer schräg auf die Breite des Förderkanals 4 sich verengenden Seitenwand und mit Rollen 9' ausgestattet. Diese sich schräg auf die Breite 4.1 des Förderkanals 4 verengende Seitenwand reduziert den Bewegungsraum der geförderten Tiere im Bereich der Zutrittstelle 2' auf die Breite des Förderkanals 4. Die sich entlang ihrer aus dem Blatt herausschauenden Längsachse drehbaren Rollen 9' bewirken dabei, dass die Tiere, falls sie gegen diese Rollen 9' stossen, an ihnen abrollen und die Tiere aufgrund der massierenden Wirkung der Rollbewegung auf ihren Flanken beruhigt. Das Fördern der Tiere ist auf natürliche Verhaltensmuster dieser Tiere abgestimmt. Die Tiere, beispielsweise Schweine, werden durch Spiegel auf die Fördereinrichtung gelockt und sie werden dabei durch massierende Bürsten beruhigt. Der Zutritt zur Fördereinrichtung erfolgt somit zwangfrei, ohne die notwendige Einwirkung aktiver Zuführhilfen wie Stockschläge. Des weiteren ist, verglichen mit dem Bewegungsraum der Tiere in der Bucht 1', der Bewegungsraum der Tiere im Förderkanal 4 wesentlich eingeschränkt. Schliesslich ist diese Ausführungsform von Zutrittstellen 2, 2' auf die Fördereinrichtung mit bekannten und bewährten Mitteln in Metall- und Holzbauweise zu realisieren. Sobald alle Tiere der Bucht 1' auf das Dosierband 6 gestiegen sind, wird die Zutrittstelle 2' geschlossen. Nach Einschwingen der Schwingtür 22' und nach Zurückschieben der Schiebetüren 8' und 7' hat der Förderkanal 4 im Bereich der Zutrittstelle 2' wieder Förderbreite und die Bucht 1' ist geschlossen. Daraufhin kann beispielsweise Tieren in den angrenzenden Buchten der Zutritt auf das Dosierband 6 gewährt werden. Dem Fachmann stehen bei Kenntnis der vorliegenden Erfindung vielfältige Möglichkeiten der Realisierung und Ausbildung solcher Formen der Zutrittsmittel offen.

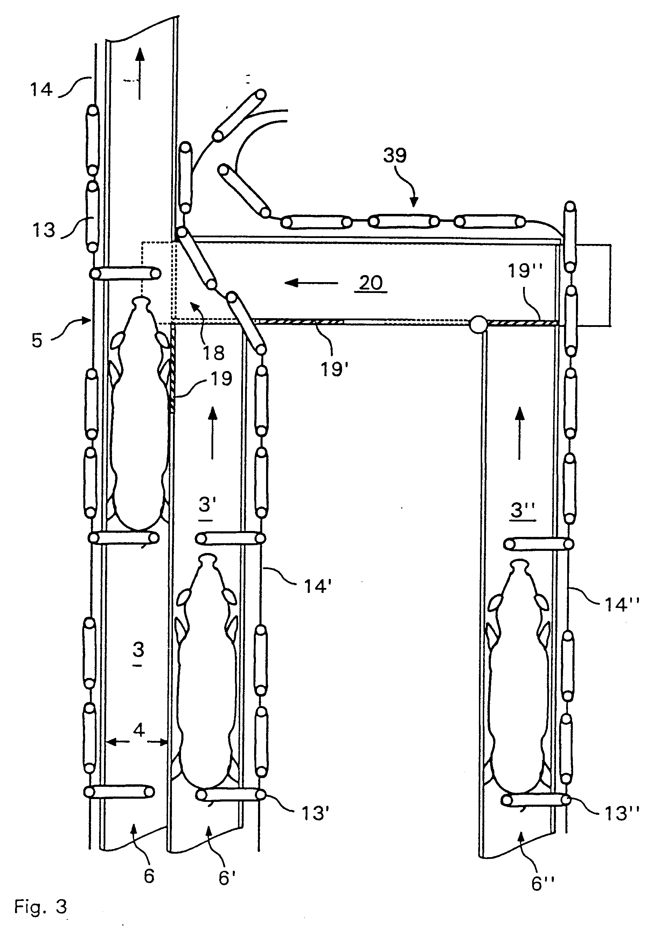

In **Figur 3** ist eine weitere Draufsicht eines Teils einer bevorzugten Ausführungsform von Dosiervorrichtungen der erfindungsgemässen Fördereinrichtung, wo Tiere in Kolonnen gefördert werden und sie zeigt einen Teil einer bevorzugten Ausführungsform einer Verzweigungsvorrichtung. In diesen Dosiervorrichtungen 3, 3', 3'' werden Tiere einzeln in Kolonnen gefördert und sind auf den Dosierbändern 6, 6', 6'' durch Trennmittel 39 in Form von Laufsperren 13, 13', 13'' voneinander getrennt.

In dieser Ausführungsform werden beispielsweise drei Dosierbänder 6, 6', 6'' durch die Verzweigungsvorrichtung 18 zusammengefasst. Bei geöffneten Schiebern 19, 19', 19'' der Verzweigungsvorrichtung 18 steigen auf Nebendosierbändern 6', 6'' geförderte Tiere über ein Verbindungsband 20 auf das Hauptdosierband 6. Aus Platzgründen werden die Schieber 19, 19', 19'' zum Öffnen in die Kanalwand 5 geschoben, sodass er keine geförderten Tiere behindert oder stört (die Schieber 19 und 19' sind eingeschoben, der Schieber 19'' ist ausgeschoben). Über diese Verzweigungsvorrichtung lassen sich verschiedene Tierströme der Dosierbänder 6, 6', 6'' steuern. Natürlich lassen sich Schieber 19, 19', 19'' in andere Ebenen schieben, beispielsweise lassen sie sich von den Bändern entfernen und wegschieben. Das Steuern dieses Verzweigens und Zusammenfassens erfolgt vorteilhafterweise automatisch, per Distanz. Beispielsweise werden Tierströme über Positionsbestimmungsmittel wie Videokameras bildlich erfasst oder sie werden über Ultraschall- und Lichtdetektoren strukturell erfasst und in einer Recheneinheit digitalisiert und ausgewertet. Die Position der Tiere vor und nach der Verzweigungsvorrichtung 18 wird so bestimmt. Durch zeitgeschaltetes (synchronisiertes) Öffnen und Schliessen der Schieber 19, 19', 19'' der Verzweigungsvorrichtung 18 und Fördern des Verbindungsbands 20 werden diese Tierströme zusammengefasst. Aus Sicherheitsgründen erfassen die Positionsbestimmungsmittel auch, ob sich Tiere "zu lange" auf dem Verbindungsband 20 befinden, d.h. ob sich dort vielleicht zwei Tiere verkeilt haben oder ob ein Tier gegen die Förderrichtung des Bandes läuft und so nicht übergeben wird. Ein oder mehrere Schieber 19, 19' oder 19'' können dann kurzzeitig geschlossen werden, oder das Verbindungsband 20 kann dann kurzzeitig angehalten werden.

Zum Verzweigen und Zusammenfassen steigen die auf einem Dosierband 6' oder 6'' geförderten Tiere am Ende dieser Dosierbänder 6' oder 6'' auf ein gewinkelt zur Förderrichtung der Dosierbänder 6, 6', 6'' förderndes und diese Dosierbänder 6, 6', 6'' verbindend förderndes Verbindungsband 20. Gemäss Figur 3 beträgt dieser Winkel 90°, natürlich sind auch Kleinere Winkel wie 45° möglich. Das Verbindungsband 20 fördert vorteilhafterweise mit gleicher Fördergeschwindigkeit wie die Dosierbänder 6, 6', 6'' und es fördert in der durch den Förderpfeil gekennzeichneten Förderrichtung. Aus Sicherheitsgründen, um den Tieren ein störungsfreies und nicht verwirrendes Umsteigen zwischen den Dosierbändern 6, 6', 6'' und dem Verbindungsband 20 zu ermöglichen, ist das Verbindungsband 20 mit einer leichten Höhendifferenz von beispielsweise 1 bis 5 cm in Förderrichtung abfallend angelegt. Das Verbindungband 20 wird übergangsfrei an das Hauptdosierband 6 herangeführt, dies geschieht, indem es mit obiger leichter Höhrndifferenz unterhalb das Hauptdosierbands 6 geführt und erst dort gewendet wird. Anstelle der in Figur 3 gezeigten Ausbildungsform eines einheitlichen, geradlinig fördernden Verbindungsbandes 20, ist es natürlich auch möglich, ein in zueinander bewegliche und ineinander wirkende Glieder gegliedertes Verbindungsband zu verwenden. Diese Ausführungsform ist nicht abgebildet. Natürlich lassen sich auch lediglich zwei Dosierbänder oder es lassen sich auch mehr als drei Dosierbänder zusammenfassen. Dem Fachmann stehen bei Kenntnis der vorliegenden Erfindung hierbei vielfältige Möglichkeiten offen.

Auf diese Art und Weise lassen sich Tierströme im erfindungsgemässen Verfahren zusammenfassen, sie lassen sich auch trennen. Beispielsweise kann eines der Dosierbänder 6' oder 6'' Tiere langsamer oder zeitweise stillstehend auf Wartebändern fördern. Beispielsweise kann ein Dosierband 6' oder 6'' länger als das Dosierband 6 sein, sodass bei gleicher Fördergeschwindigkeit der Dosierbänder 6, 6' oder 6'' die Tierströme des Dosierbandes 6 diejenigen der Dosierbandes 6' oder 6'' räumlich überholen. Natürlich lassen sich solche Verzweigungsvorrichtungen auch im, verglichen mit Figur 3, umgekehrten Fördersinn einsetzen. In einer solchen (nicht abgebildeten Ausführungsform) werden dann Tierströme aufgeteilt. Schliesslich lassen sich solche Verzweigungsvorrichtungen kombinieren, sodass im erfindungsgemässen Verfahren mit dieser Einrichtung ein komplexes Steuern von Tierströmen realisiert wird. Auch hier gilt wieder, dass der Fachmann, bei Kenntnis der vorliegenden Erfindung, vielfältige Möglichkeiten der Realisierung solcher Verzweigungsvorrichtungen hat.

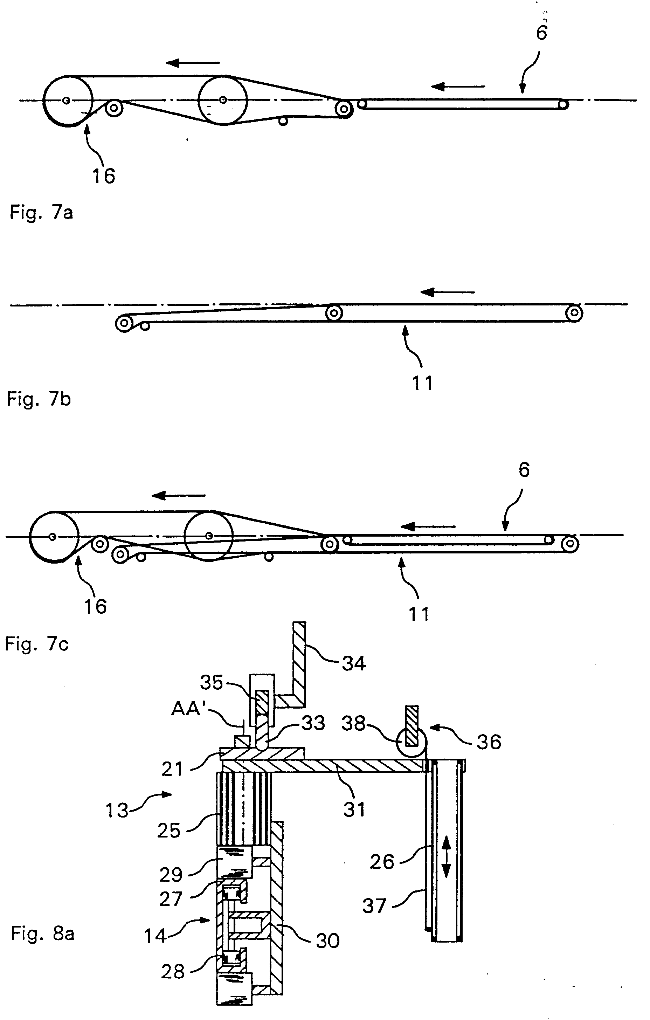

Die Trennmittel 39 in Form von Laufsperren 13, 13', 13'' dienen dazu, die Relativbewegungen der Tiere auf den Dosierbändern 6, 6', 6'' einzuschränken. Sie werden durch endlos verlaufende Laufsperrenbänder 14, 14', 14'' mit der gleichen Geschwindigkeit wie die Dosierbänder 6, 6', 6'' und in gleicher Förderrichtung bewegt. Sobald die Laufsperren 13, 13', 13'' in den Förderkanal 4 eingelenkt werden, klappen sie vorteilhafterweise hinter und vor den Tieren selbständig ein. Nur bewusste Sperren klappen ein. Dies lässt sich durch Positionserfasssungsmittel wie Videokameras oder über Ultraschall- und Lichtdetektoren strukturell erfassen, digitalisieren und durch eine Recheneinheit automatisch nach einem spezifischen Algorithmus steuern. Befindet sich ein Tier im Förderkanal 4, so klappen an dessen Position die Laufsperren 13, 13', 13'' nicht ein. Auch lassen sich die Laufsperren 13', 13'' beim Überqueren des Verbindungsbandes 20 einklappen, derart, dass sie auf dem Verbindungsband 20 geförderte Tiere nicht stören oder behindern (für mehr Details hierzu siehe für diese Zweck das Hochziehen des Vertikalrohrs 26 gemäss Figur 8a). Für mehr Details diesbezüglich wird auf die Beschreibung einer vorteilhaftne Ausführungsform einer Laufsperre und eines Laufsperrenbandes gemäss Figur 8 verwiesen. Die Laufsperren 13, 13', 13'' sind auf den Laufsperrenbändern 14, 14', 14'' in höherer Dichte als die auf den Dosierbändern 6, 6', 6'' zu fördernden Tiere angebracht. Gemäss Figur 3 sind pro Tierlänge ungefähr drei Laufsperren 13, 13', 13'' angeordnet. Verglichen mit dem Bewegungsraum der Tiere nach Zutritt in den Förderkanal 4 gemäss Figur 2, erlauben das nach dem Zutritt der Tiere erfolgende Einklappen der Laufsperren 13, 13', 13'' eine weitere, auf Tierlänge erfolgende Einschränkung des Bewegungsraums der geförderten Tiere beim Fördern mit der erfindungsgemässen Fördereinrichtung. Ohne diese auf Tierlänge einklappbaren Laufsperren 13, 13', 13'' würden die Tiere auf den Dosierbändern 6, 6', 6'' hin und her laufen oder sie würden stehen bleiben und sie würden so beispielsweise Staus usw. verursachen und den Betrieb der Fördereinrichtung behindern. Die Laufsperren 13, 13', 13'' verhindern ein Vorlaufen und sie verhindern insbesondere ein Rücklaufen der Tiere auf dem Dosierbändern 6, 6', 6''. Die Dosiervorrichtung isoliert die Tiere voneinander und schränkt ihren Bewegungsraum zum einen durch die Breite des Förderkanals 4 und zum anderen durch die Laufsperren ein.

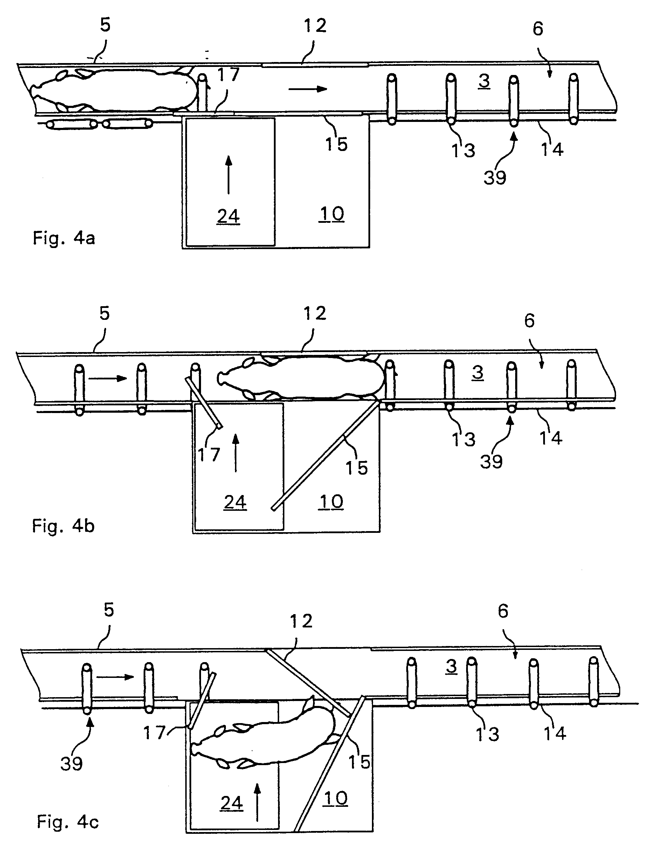

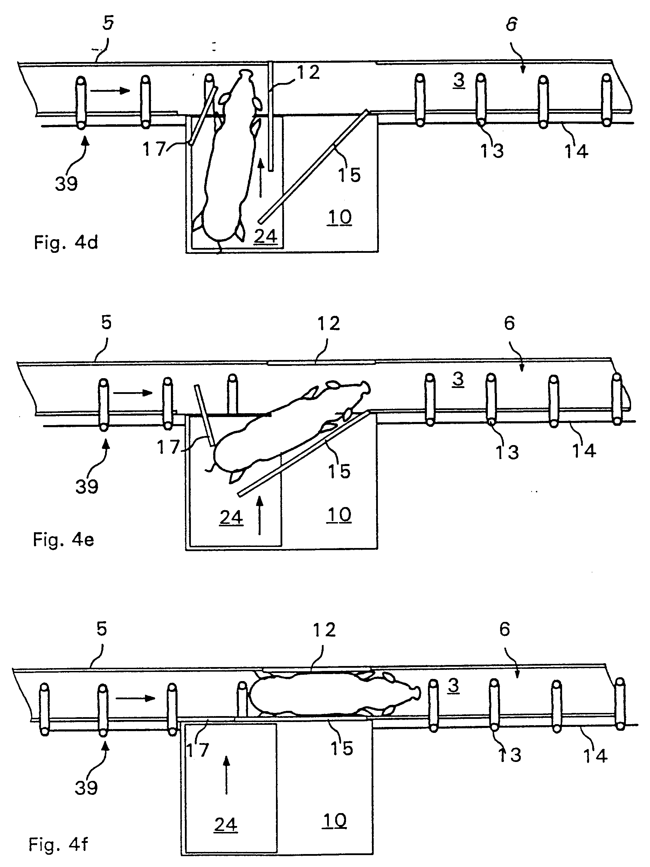

Die **Figuren 4a bis 4f** zeigen in einer Draufsicht einen Teil einer bevorzugten Ausführungsform einer Wendevorrichtung der erfindungsgemässen Fördereinrichtung, wo ein stehend gefördertes Tier um 180° gewendet wird. Eine Wendevorrichtung hat das automatische Erkennen und Wenden stehend geförderter Tiere im Förderkanal 4 zur Aufgabe. Eine solche Wendevorrichtung ist für das ausgerichtete erfindungsgemässe Fördern notwendig. Je nach Zweck des Tierförderns ist es angebracht (beispielsweise für Schlachtvieh auf dem Weg zur Schlachtbank), dass die Tiere am Ende der Fördereinrichtung alle mit dem Kopf in Förderrichtung oder dass auch alle mit dem Kopf entgegen der Förderrichtung ausgerichtet ankommen. Tiere, die diese gewünschte Ausrichtung nicht aufweisen (beispielswiese sind sie verkehrt auf das Dosierband gestiegen), werden somit durch die Wendevorrichtung gewendet.

Für diese Wenden werden Tierstöme über Positionsbestimmungsmittel wie Videokameras bildlich erfasst oder über Ultraschall- und Lichtdetektoren strukturell erfasst und in einer Recheneinheit selbständig digitalisiert und ausgewertet. Somit wird die Position und die Förderausrichtung eines im Förderkanal 4 geförderten Tieres automatisch bestimmt (Figur 4a) und ein erwünschter Wendevorgang wird in dem Moment automatisch eingeleitet, in dem sich ein verkehrt herum gefördertes Tier vor der Wendevorrichtung befindet (Figur 4b). Dies kann nach einem spezifischen Algorithmus erfolgen. Hier erfolgt das synchronisierte, zeitlich aufeinander abgestimmte Betätigen von Wendemitteln 12, 15 und 17. In der bevorzugten Ausführungsform wird zeitgeschaltet eine erste Schwingwand 15 geöffnet und eine Drehwand 17 gewendet, was dem Tier Zutritt zu einem Wenderaum 10 der Wendevorrichtung ermöglicht. Daraufhin wird eine zweite Schwingwand 12 ausgeschwenkt, welche das Tier durch seitliche Impulse und/oder Impulse von hinten aus dem Förderkanal 4 herausschiebt (Figur 4c). Die Tiere (beispielsweise Schweine) bringen gegen solche leichte Impulse von der Seite oder von hinten keinen oder nur geringen Widerstand auf. Das Tier läuft von dieser zweiten Schwingwand oder Impulsgeber 12 derart tiergerecht geschoben vom Dosierband 6 in den Wenderaum 10 und dreht sich um seine Vorderbeine. Hier wird der Bewegungsraum des Tieres durch die Wenderaumwände` durch die Drehwand 17 und durch die erste Schwingwand 15 begrenzt. Das Tier weicht, ganz seinen natürlichen Verhaltensmustern folgend, diesen Begrenzungen aus und dreht sich im Laufen und geschoben um seine Vorderbeine und mit dem Kopf zur Fördervorrichtung 3 hin. Zur Unterstützung dieser Wendebewegung ist im Wenderaum 10 ein Förderband 24 angebracht, welches in Förderrichtung (gekennzeichnet durch den Förderpfeil) fördert. Das Förderband 24 nimmt ungefähr die Hälfte des Wenderaums 10 ein und ist ähnlich wie das Dosierband 6 gearbeitet. Vorteilhafterweise ist es im Wenderaum 10 so angebracht, dass das Tier beim Eintritt in den Wenderaum 10 auf das Förderband 24 steigt, welche das Tier dann in Förderrichtung fördert. In Figur 4d hat es sich um ungefähr 90° gedreht, aber es steht mit seinem Kopf in Förderrichtung des Förderbandes 24. Der Bewegungsraum des Tieres wird durch die Wenderaumwände, durch die Drehwand 17 und durch die zweite Schwingwand 12 begrenzt. Die zweite Schwingwand 12 wird zurückgezogen und das Tier läuft in den dabei sich vor ihm auftuenden Raum hinein und dreht sich wiederum im Laufen um seine Vorderbeine und mit dem Kopf zur Fördereinrichtung 3 hin (Figur 4e). Auch hier bringen die Drehwand 17 und die erste Schwingwand 15 leichte Impulse von hinten und/oder von der Seite am Tier an, gegen die das Tier keinen oder nur geringen Widerstand aufbringt, sodass es von dieser ersten Schwingwand 15 und der Drehwand 17 derart tiergerecht geschoben mit dem Kopf voran aus dem Wenderaum 10 auf das Dosierband 6 und bis zur nächsten eingeklinkten Laufsperre 13 vorläuft (Figur 4f).

Dieser in den Sequenzen der Figuren 4a bis 4g gezeigte Wendevorgang erfolgt rasch. Innerhalb von ungefähr 2 sec wird das um 180° verkehrt geförderte Tier gewendet. Der Vorgang beruht auf natürlichen Verhaltensmustern der Tiere und wendet tiergerecht. Das Tier wird durch die Schwingwände 12 und 15 und durch die Drehwand 17 geleitet und gelenkt. Dieses Wenden wird durch leichte Impulse von der Seite und/oder von hinten initiert (wo das Tier instabil ist) und es dreht sich dann um seine Vorderbeine. Natürlich ist es möglich, diesen Wendevorgang auch mit einem in umgekehrter Förderrichtung fördernden Dosierband 6 durchzuführen, wo also das Dosierband 6 in entgegengesetzter Förderrichtung verglichen mit dem Förderpfeil gemäss den Figuren 4a bis 4f ein auf diesem verkehrt stehendes Tier fördert. Im Unterschied dazu, wird das Tier dann durch leichte seitliche Impulse und/oder Impulse von hinten mit seinen Hinterbeinen zuerst auf das Förderband 24 gewendet und dreht sich um seine Vorderbeine in dessen Förderrichtung.

Diese Variante des Wendevorganges gemäss den Figuren 4a bis 4g lässt sich natürlich bei Kenntnis der Erfindung verändern. So kann man beispielsweise ein stehend gefördertes Tier um 180° wenden und es nicht mehr wie in der Variante gemäss den Figuren 4a bis 4g auf das gleiche (ursprüngliche) Dosierband zurückleiten, sondern man kann es auch auf ein weiteres Dosierband leiten. Solch ein weiteres Dosierband kann beispielsweise in einem beliebigen Winkel oder auch in einem rechten Winkel zum ursprünglichen oder ersten Dosierband verlaufen und fördern. Das erste Dosierband kann also das Dosierband 6 gemäss Figur 4b sein und das weitere Dosierband kann das Förderband 24 des Wenderaums 10 gemäss Figur 4b sein. Gemäss Figur 4c wird das Tier durch die durch leichte seitliche Impulse und/oder Impulse von hinten mit seinen Vorderbeinen zuerst auf das Förderband 24 und dreht sich um seine Vorderbeine in dessen Förderrichtung. Verglichen mit der Tierposition auf dem Dosierband 6 gemäss Figur 4b steht das Tier gemäss Figur 4d um 180° gewendet auf diesem Förderband 24. Werden nun der Wenderaum 10 und das Förderband 24 in Förderrichtung des Förderbandes 24 "verlängert", so wird das Tier nicht mehr auf das Dosierband 6 zurückgeleitet und kommt auch nicht vor der Förderkanalwand zu stehen, sondern es bleibt auf dem "verlängerten" Förderband 24 und wird dort um 180° gewendet gefördert. Somit ist der oben erwähnte Wendevorgang durch einen Wechsel des fördernden Dosierbandes realisiert. Natürlich kann dieser Wendevorgang auch in entgegengesetzter Förderrichtung des Dosierbandes 6 betrieben werden, wo verglichen mit dem Förderpfeil gemäss den Figuren 4a bis 4d, das Tier verkehrt herum gefördert wird. Im Unterschied dazu, wird das Tier dann durch leichte seitliche Impulse und/oder Impulse von hinten mit seinen Hinterbeinen zuerst auf das Förderband 24 gewendet und dreht sich um seine Vorderbeine in dessen Förderrichtung.

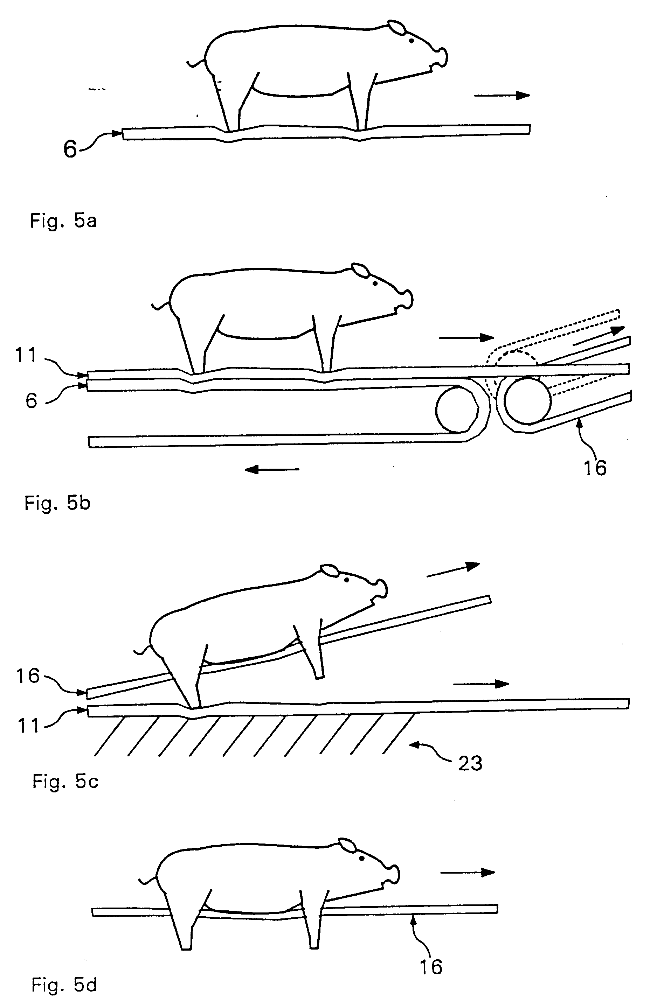

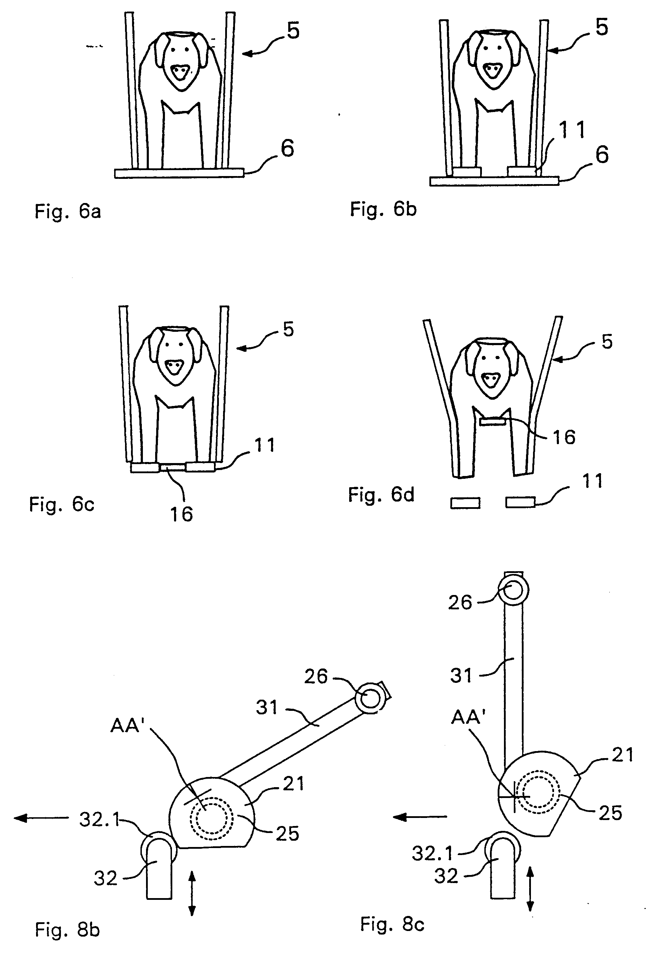

Die **Figuren 5a bis 5f und 6a bis 6d** zeigen in einer Seitenansicht und respektive in einer Ansicht einen Teil bevorzugter Ausführungsformen einer Übergabevorrichtung der erfindungsgemässen Fördereinrichtung, wo ein auf einem Dosierband 6 stehend gefördertes Tier auf ein Brustband 16 gelegt wird.

Die Übergabevorrichtung vermittelt die geförderten Tiere also zwischen einem schulterbreiten Dosierband 6 und einem brustbreiten Brustband 16. Diese Vermittelung erfolgt so, dass in einem ersten Schritt zwei parallel zueinander laufende Fussbänder 11 mit dem Dosierband 6 überlagert werden. Die Fussbänder 11 sind schmaler als das Dosierband 6 und sie liegen beispielsweise bei einer ersten Übergabestelle für zu fördernde Tiere als Endlosband direkt auf einem ebenfalls endlos laufendem Dosierband 6. Das Dosierband 6 und die Fussbänder 11 verlaufen somit auf gleicher Förderhöhe bezüglich des Bodens, sie verlaufen mit gleicher Fördergeschwindigkeit und in gleicher Förderrichtung. Die Tiere steigen bei der ersten Übergabestelle von einem Dosierband 6 (Figuren 5a und 6a) auf ein Dosierband 6 um, auf welchem zwei Fussbänder 11 aufliegen (Figuren 5b und 6b). Die so geförderten Tiere stehen mit ihren Füssen auf Fussbändern 11. Vorteilhafterweise sind die Fussbänder 11 durch eine Brustbandbreite voneinander getrennt.

In einem weiteren Schritt wird das Dosierband 6 entfernt und ein parallel zuden beiden und zwischen den beiden Fussbändern 11 verlaufendes Brustband 16 wird hinzugefügt. Vorteilhafterweise wird das Dosierband 6 von den Fussbändern 11 entfernt, indem es an einer zweiten Übergabestelle als Endlosband an einer Umkehrwalze in einem Winkel von beispielsweise 180° weggefördert wird. Das Brustband 16 wird beispielsweise an dieser zweiten Übergabestelle als Endlosband über eine weitere Walze in einem Winkel zu den Fussbändern 11 an diese herangefördert (Figur 5c). Das Brustband 16 weist ungefähr die Breite des Abstand der beiden Fussbänder 11 zueinander auf und verläuft zwischen diesen beiden Fussbändern 11. Zur Schweineförderung sind die Fussbänder und das Brustband typischerweise je 15 cm breit. Die Fussbänder 11 und das Brustband 16 verlaufen in einer gewinkelten Anordnung zueinander. An der zweiten Übergabestelle wird das Brustband 16 an die Brust der auf Fussbändern 11 stehend geförderten Tiere herangefördert. Gemäss der Ausführungsform der Figuren 5b und 5c wird das Brustband 16 von unten kommend und zwischen den Fussbändern 11 verlaufend, in einem Winkel an die Brust der Tiere herangefördert. Auf diese Weise nähert sich das Brustband 16 um die Distanz der Beinlänge der Tierbrust. Fussbänder 11 und Brustband 16 fördern in einer Spreizbewegung auseinander. D.h., dass sie im Bereich der zweiten Übergabestelle auf der gleichen Förderhöhe bezüglich des Bodens verlaufen, dass sie aber mit wachsender Förderstrecke eine immer grössere Förderhöhendifferenz zueinander aufweisen. Zur tierspezifischen Anpassung an die Beinhöhe der geförderten Tiere, kann die Höhe des Drehpunktes der Umkehrwalze des Brustbandes 16 an der zweiten Übergabestelle in seiner Position bezüglich derjenigen der Umkehrwalze des Dosierbandes 6 verändert werden. Dies ist in Figur 5b beispielhaft zu sehen, wo ein anderes Brustband gestrichelt eingezeichnet ist, welches bezüglich der Förderebene des Dosierbandes 6 eine höher angebrachte Umkehrwalze besitzt. Auf diese Weise kann die Übergabe tierspezifisch eingestellt werden. Das Brustband 16 fördert vorteilhaftweise vom Boden weg und nähert sich mit steigender so entstehender Förderhöhendifferenz der Brust der auf den Fussbändern 11 stehenden Tiere. Zur Unterstützung der Übergabe ist die Bodenauflage 23 an der zweiten Übergabestelle absenkbar gearbeitet (beispielsweise in der Ausführung einer gedämpften Auflage). An der Übergabestelle gibt die Bodenauflage 23 nach Detektion von Tieren automatisch gesteuert (aktiv) oder sie gibt (passiv) unter dem Gewicht der geförderten Tiere, um mehrere cm in Richtung des Bodens nach. Diese Bodenauflage 23 ist in Figur 5c schraffiert schematisch gezeichnet. Die Tiere nähern sich durch dieses Absenken um mehrere cm mit ihrer Brust dem Brustband 16. Zur Beruhigung der Tiere sind in diesem Bereich seitlich massierende Bürsten angebracht, die die Tiere bei diesem Absenken beruhigend massieren. Vorteilhafterweise werden die Fussbänder 11, zur Unterstützung des Aufsteigens der Tiere auf das Brustband 16, nach der Übergabestelle leicht abfallen (in Bodenrichtung) geführt.

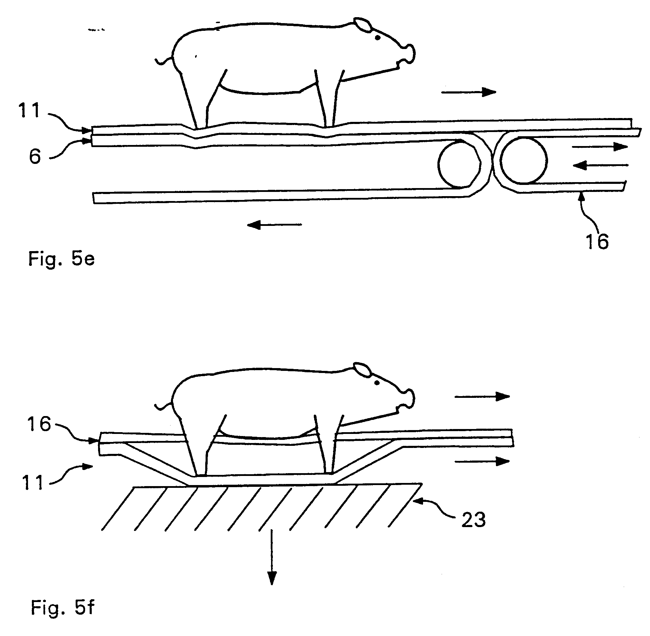

In einer weiteren, in den Figuren 5e und 5f gezeigten Ausführungsform, verläuft das Brustband 16 nach der Übergabestelle auf gleicher Höhe wie die Fussbänder 11 weiter und wird vorteilhafterweise erst an den Umkehrwalzen der Fussbänder 11 und zusammen mit diesen gewendet (Figur 5e). Zur Übergabe ist die Bodenauflage 23 an der zweiten Übergabestelle absenkbar, beispielsweise in der Ausführung einer gedämpften Auflage gearbeitet, die unter den Fussbändern 11 nachgeben. An der Übergabestelle gibt die Bodenauflage 23 nach Detektion von Tieren automatisch gesteuert (aktiv) oder sie gibt (passiv) unter dem Gewicht der geförderten Tiere, um mehrere cm in Richtung des Bodens nach. Diese Bodenauflage 23 ist in Figur 5f schraffiert schematisch gezeichnet, das Nachgeben ist durch einen Nachgebepfeil in Richtung des Bodens gezeichnet. Die Fussbänder 11 sind also spannbar gearbeitet. Für solche Übergaben bieten sich dem Fachmann bei Kenntnis der Erfindung vielfältige Möglichkeiten der Realisierung an.

Am Ende der Übergabevorrichtung im Bereich der Abgabestelle liegen die Tiere vollständig auf dem Brustband 16 und verlieren den Kontakt zu den Fussbändern 11 (siehe Figuren 5c und 6d). Das Aufliegen der Tiere auf das Brustband wird von seitlich in der Kanalwand eingelassenen Bürsten unterstützt, welche die Tiere bei der Übergabe massieren, was diese beruhigt und ablenkt. Das Brustband 16 fördert die Tiere nun vollständig auf der Brust liegend vorteilhaftweise in einer horizontalen Position bezüglich einer Förderebene (parallel zum Boden), während die Tiere durch die Förderkanalwände 5 haltend geführt werden. Verglichen mit der stehenden Förderstellung, schränkt diese liegende Förderstellung den Bewegungsraum der Tiere weiter ein, die Tiere sind nun weitgehend fixiert.

Der Förderkanal kann nach oben offen oder halb oder ganz geschlossen gearbeitet sein. Es ist also möglich, ihn durch Lampen, beispielsweise auf indirekte Art und Weise, zu beleuchten. Diese Ausführungsform ist insoweit vorteilhaft, da sich dann die Förderkanalwände 5 ganz oder teilweise mit Spiegeln auskleiden lassen, sodass sich die geförderten Tiere darin sehen können. Gerade bei schräg angeordneten Förderkanalwänden 5 gemäss Figur 6d lässt sich so der Förderkanal beispielsweise prismenartig mit Spiegeln auskleiden, sodass die einzeln in Kolonne geförderten Tiere das Gefühl erhalten, sich immer noch in einer Bucht mit ihren Artgenossen zu befinden. Durch das Täuschen der Spiegel werden die Tiere beruhigt und abgelenkt.

Die **Figuren 7a bis 7c** zeigen in einer Seitenansicht schematisch einen Teil einer bevorzugten Ausführungsform einer Übergabevorrichtung der erfindungsgemässen Fördereinrichtung, mit Dosierband, Fussbändern und Brustband. Diese Ansichten vermitteln einen Überblick der Fördereinrichtung und zeigen das Zusammenwirken der Fördermittel bezüglich einer gestrichelt gezeichneten Förderebene, parallel zum Boden auf.

Figur 7a zeigt die räumliche Anordnung und Förderrichtung von Dosierband 6 und Brustband 16 auf, Figur 7b zeigt die räumliche Anordnung und Förderrichtung der Fussbänder 11 auf und Figur 7c ist eine Überlagerung vom Dosierband 6, von den Fussbändern 11 und vom Brustband 16 gemäss den Figuren 7a und 7b. Figur 7a zeigt auf, wie die Förderhöhe der Tiere durch das Aufheben auf das Brustband 16 bezüglich der Förderebene weitgehend gleichbleibt, der Höhenunterschied berücksichtigt die die Beinhöhe der Tiere und ist tierspezifisch. Figur 7b zeigt auf, wie die Fussbänder 11 nach der Übergabe leicht gewinkelt von der Förderebene und vom Brustband 16 weggeführt werden, um ein Aufheben der Tiere auf das Brustband 16 zu erleichtern. Figur 7c zeigt auf, wie die verschiedenen Bänder zusammenwirken und wie die Bänder über verschieden grosse Walzen gewendet werden. Realisiert wird dieses unterschiedlich ausgerichtete Fördern der Bänder bezüglich der Förderebene durch unterschiedlich dimensionierte Walzen, an denen die Bänder aufliegen, geführt und gewendet werden. Auch hier stehen dem Fachmann bei Kenntnis der vorliegenden Erfindung vielfältige Realisierungsmöglichkeiten offen.

Die **Figuren 8a bis 8c** zeigen in einer Seitenansicht sowie in einer Draufsicht schematisch einen Teil einer bevorzugten Ausführungsform einer Laufsperre 13 und eines Laufsperrenbandes 14. Das Laufsperrenband 14 gemäss Figur 8a ist vorteilhafterweise als C-Laufschiene 27 gearbeitet. Innerhalb der Laufschiene 27 läuft eine antreibende Laufkette mit mehreren Laufrädern 28.

Oberhalb und unterhalb der C-Laufschiene 27 sind mehrere Stabilisatorrollen 29 der Laufsperre 13 abgebracht, welche etwaige Belastungen beim Betrieb der Einrichtung (beispielsweise Stösse von Tieren) auffangen. Diese Stabilisatorrollen 29 sind beispielsweise vier Hartgummiräder (in der Sicht gemäss Figur 8a sind lediglich zwei Stabilisatorrollen 29).

Die in der C-Laufschiene 27 laufenden Laufräder 28 und die ausserhalb der C-Laufschiene 27 laufenden Stabilisatorollen 29 sind über eine Horizontalplatte 30 miteinander verbunden. An der Horizontalplatte 30 ist eine in einem Gehäuse sich befindende Torsionsfeder 25 angebracht, welche mit einer einstellbaren Kraft vorgespannt ist und die Laufsperre 13 in Ruhestellung (nicht in einen Förderkanal eingeklinkt) gegen die C-Laufschiene 27 drückt. Über die Torsionsfeder 25 sind ein Laufsperrenbügel 31 sowie ein gegen diesen Laufsperrenbügel 31 über eine Feder vorgespanntes Vertikalteil 26 mit der Horizontalplatte 30 verbunden. Der Laufsperrenbügel ist tierspezifisch 20 bis 25 cm lang und ragt bei eingeklinkter Laufsperre 13 (Arbeitsstellung) mit dem Vertikalteil 26 in den Förderkanal hinein und versperrt diesen (siehe Figuren 3 und 4).

Figur 8b und 8c zeigen, wie die Laufsperre 13 durch Heranführen eines Entriegelungshebels 32 an eine Entriegelungsnocke 21 in den Förderkanal eingeklinkt wird. Das Entriegeln der vorgespannten Laufsperre 13 erfolgt vorteilhafterweise von aussen. Der Entriegelungshebel 32 ist an einer Einklinkstelle der Fördereinrichtung ortsfest montiert und kann um eine Entriegelungsdistanz von beispielsweise 1 bis 5 cm (gekennzeichnet durch den Doppelpfeil) in die Trajektorie der Entriegelungsnocke 21 der sich in Ruhestellung befindenden Laufsperre 13 bewegt werden. Solche Entriegelungshebel können an beliebigen Positionen der Fördereinrichtung angebracht sein und dort Laufsperren 13 betätigen. Die Entriegelungsnocke 21 ist starr mit dem Gehäuse der Torsionsfeder 25 und dem Laufsperrenbügel 31 der Laufsperre 13 verbunden. Dieses Bewegen um eine Entriegelungsdistanz kann automatisch, beispielsweise durch Vor- und Rückfahren mittels eines Schrittmotors oder Schieben eines Zylinders geschehen. Nach Vorfahren des Entriegelungshebels 32 gemäss Figur 8b steht dieser mit seinem vorderen Ende 32.1 in der Trajektorie der Entriegelungsnocke 21, sodass sie in Kontakt kommen, der Entriegelungshebel 32 an der gekrümmten Seitenfläche der Entriegelungsnocke 21 verrutschfrei Kraft ausübt und den starr verbundenen Laufsperrenbügel 31 um die mit AA' gekennzeichnete Drehachse der Laufsperre 13 verdreht. Der in Ruhestellung ungefähr in Förderrichtung eingeklinkte Laufsperrenbügel 31 wird somit in Arbeitsstellung ausgeklinkt (Figur 8c). Der Entriegelungshebel 32 übt verrutschfrei Kraft an der Entriegelungsnocke 21 aus, solange er an der gekrümmten Seitenfläche anliegt, der Entriegelungshebel 32 übt keine Kraft aus, sobald er auf die gerade Seitenfläche der Entriegelungsnocke 21 kommt. Solche Nockentriebe werden als bekannt vorrausgesetzt, auch hier stehen dem Fachmann bei Kenntnis der vorliegenden Erfindung vielfältige unterschiedliche Realisierungsmöglichkeiten offen.

Um bei diesem Einklinken in die Arbeitsstellung kein Tier einzuklemmen, ist als Sicherheitsvorrichtung der Entriegelungshebel 32 frei bestimmbar vorgespannt gelagert, sodass der Entriegelungshebel 32 bei zu hohem Kraftaufwand, d.h. bei zu hohem Drehmoment, ausrastet und und der Einklinkvorgang ausgesetzt wird. Die einzuklinkende Laufsperre 13 wird nicht ausgeklinkt.

Als weitere Sicherheitsvorrichtung ist die Laufsperre 13 mit einem Rasterstift 33 versehen, der in eine Senke des Entriegelungsnockens 21 rastet und der beispielsweise über einen Vorspanner 35 (beispielsweise ein Keil) frei bestimmbar vorgespannt ist. Tritt nun in Arbeitsstellung (eingeklinkte Laufsperre 13) eine Überlast auf, d.h. treten äussere Kräfte auf, die grösser als die eingestellte Überlast sind, so rastet der Rasterstift 33 aus der Senke aus und führt die Laufsperre 13 getrieben durch die Vorspannung der Torsionsfeder 25, wieder in die Ruhestellung an der C-Laufschiene 27 zurück (die Laufsperre 13 wird dann ausgeklinkt).

Das Ausklinken des Rasterstiftes 33 kann durch ein Hindernis ausgelöst werden, gegen welches die Laufsperre 13 beim Fördern stösst oder es kann durch ein unruhiges Tier ausgelöst werden, welches gegen die Laufsperre 13 stösst.

Das Ausklinken des Rasterstiftes 33 kann auch direkt über einen Ausklinker 34 von aussen bewirkt und an beliebigen Orten gesteuert erfolgen. In Analogie zum Einklinken aus der Ruhestellung über den Entriegelungshebel 32 wird nun ein Ausklinken der Laufsperre 13 aus der Arbeitsstellung über einen (nicht eingezeichneten) Ausklinkhebel bewirkt, der gegen den Ausklinker 34 gefahren wird.

Als weitere Sicherheitsvorrichtung ist das Vertikalteil 26 in seiner unteren Position vorgespannt, sodass es sich unabhängig vom Ein- und Ausklinken der Laufsperre 13 über eine von aussen (aktiv oder passiv) betätigbare Aus- und Einklinkvorrichtung 36 entspannen und aus dem Förderkanal ausklinken und auch wieder spannen und einklinken lässt (natürlich ist auch eine kontaklose Initierung mittels Funk an eine motorgetriebene Aus- und Einklinkvorrichtung 36 möglich, jedoch ist dies nicht kostengünstig). Das Vertikalteil 26 ist beispielsweise über eine Feder vorgespannt, sodass es bei eingeklinkter Laufsperre 13 für Tiere versperrend in den beispielsweise rund 45 cm breiten Förderkanal ragt und sich gespannt 1 bis 5 cm über dem Förderband befindet (das Ein- und Ausklinken der Vertikalteile 26 funktioneirt natürlich auch bei in Ruhestellung eingeklinkten Laufsperren 13). Die Aus- und Einklinkvorrichtung 36 ist beispielsweise eine mit einer Feder vorgespannte Trommel 38, die über einen Seilzug 37, das vorgespannte Vertikalteil 26 aus dem Förderkanal hochzieht (ausgeklinkt) und nach Passieren eines Hindernisses wieder in den Förderkanal herablässt (eingeklinkt). Ein solches Ausklinken des Vertikalteils 26 kann beispielsweise beim Überqueren von Verbindungsbändern gemäss Figur 3 erfolgen, sodass ein Vertikalteil 26 einer Laufsperre 13 durch die (in Figur 3 nicht abgebildeten) ortsfeste von aussen wirkendende Aus- und Einklinkvorrichtung 36 aus dem Förderkanal ausgeklinkt wird, während die Laufsperre 13 selbst immer noch eingeklinkt ist. Die nicht eingezeichneten von aussen betätigbaren Mittel zum Betätigen der Aus- und Einklinkvorrichtung 36 lassen sich genauso wie Entriegelungshebel für die Laufsperren und die Ausklinkhebel für die Rasterstifte an frei bestimmbaren Positionen neben Dosierbändern anbringen und automatisch betreiben. Die Einrichtung lässt sich somit flexibel mit ein- und ausklinkbaren Laufsperren 13 und mit weitgehend unabhängig davon ein- und ausklinkbaren Vertikalteilen 26 gestalten.

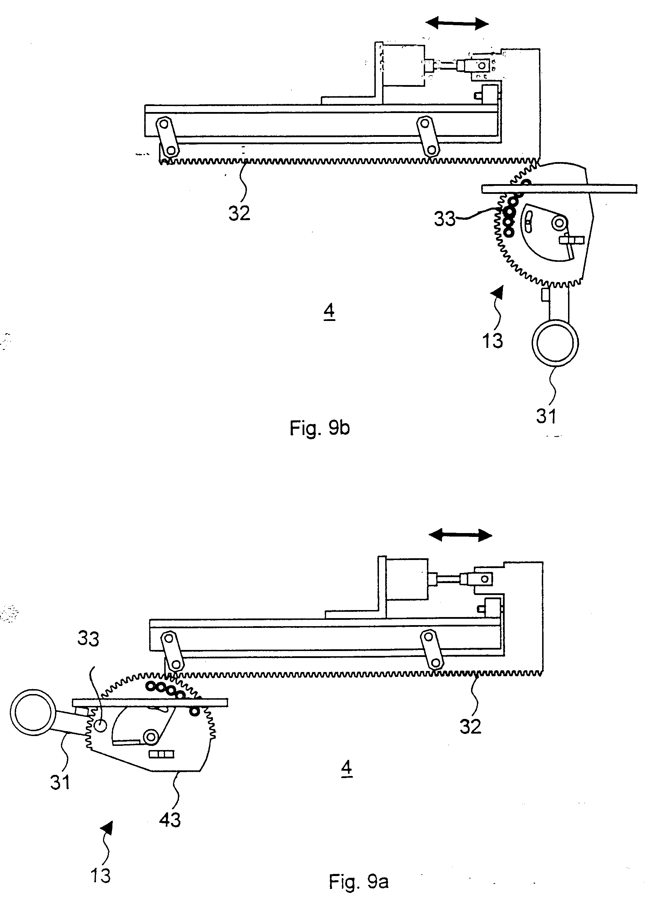

Die **Figuren 9a** und **9b** zeigen in Seitenansichten schematisch einen Teil einer weiteren bevorzugten Ausführungsform einer Laufsperre 13, beispielsweise zur Verwendung in Kombination mit einem Laufsperrenband gemäss Figur 8a. Die weitere bevorzugte Ausführungsform einer Laufsperre 13 gemäss den Figuren 9a und 9b weist die grundlegenden Merkmale der Laufsperre gemäss den Figuren 8a bis 8c auf, sodass auf diese Beschreibung verwiesen wird und im folgenden lediglich die Unterschiede hierzu dargelegt werden.

Im Hauptunterschied wird der Nockenschlag der Laufsperre gemäss den Figuren 8a bis 8c durch ein Zahnsegment 43 der Laufsperre 13 ersetzt. Zahnsegment 43 und Laufsperrenbügel 31 sind starr miteinander verbunden, sodass durch Betätigung des Zahnsegmentes 43 der Laufsperrenbügel 31 ein- und ausrastbar ist. Beispielsweise treibt ein pneumatisch betätigter Zylinderantrieb 40 einen Kolben an (gekennzeichnet durch einen Doppelpfeil), der um eine bestimmte Entriegelungsdistanz vor- und rücklaufen kann. Der Kolben betätigt beim Vor- und Rücklauf einen Entriegelungshebel 32, der über Führungsmittel zwangsgesteuert auf das Zahnsegment 43 der Laufsperre 13 wirkt, sodass das Zahnsegment 43 am Entriegelungshebel 32 abrollen kann. Im Rücklauf, bei rückgefahrenem Entriegelungshebel 32 befindet sich die Laufsperre 13 in der Ruhestellung, der Laufsperrenbügel 31 ist aus dem Förderkanal ausgeklinkt (siehe Figur 9a). Nach Vorlauf um eine Entriegelungsdistanz, bei vorgefahrenem Entriegelungshebel 32 wird der Laufsperrenbügel 31 der Laufsperre 13 in eine Arbeitsstellung in den Förderkanal eingeklinkt (siehe Figur 9b).

Um bei diesem Einklinken in die Arbeitsstellung kein Tier einzuklemmen, ist als Sicherheitsvorrichtung die Krafteinwirkung des pneumatischen Zylinders frei einstellbar, sodass der Entriegelungshebel 32 bei zu hohem Kraftaufwand auf den Laufsperrenbügel 31 nicht vorfahrbar ist und je nach Gegenkraft zurückdrückbar ist, der Einklinkvorgang erfolgt somit nicht.

Als weitere Sicherheitsvorrichtung ist die Laufsperre 13 mit einem Rasterstift 33 versehen. Der Rasterstift 33 ist beispielsweise über einen keilförmigen Vorspanner 35 gemäss Figur 8a oder über feder- oder klinkenförmige Vorspanner frei bestimmbar vorgespannt und drückt auf das Zahnsegment 43, beispielsweise rastet der Rasterstift 33 bei eingeklinkter Laufsperre 13 in eine Öffnung ein (siehe Figur 9b). Bei Überlast in Arbeitsstellung, bei zu grossem Drehmoment auf den Laufsperrenbügel 31 wird der Rasterstift 33 gegen die Vorspannung gedrückt und dekontaktiert somit vom Zahnsegment 43, beispielsweise rastet der Rasterstift 33 aus der Öffnung aus, die Laufsperre 13 ist dann in die Ruhestellung ausklinkbar.

## Patentansprüche

1. Verfahren zum tiergerechten Fördern, wobei Tiere in Förderkanälen (4) in Kolonne ausgerichtet auf Dosierbändern (6) gefördert werden, dadurch gekennzeichnet, dass die Tiere durch Trennmittel (39) voneinander getrennt gefördert und dass sie in folgenden Verfahrensschritten auf Brustbändern (16) gefördert werden.

2. Verfahren gemäss Anspruch 1, dadurch gekennzeichnet, dass die Tiere stehend durch Trennmittel (39) in Form von Laufsperren (13) voneinander getrennt in Kolonnen gefördert werden.

3. Verfahren gemäss Anspruch 1 oder 2, dadurch gekennzeichnet, dass der Zutritt der Tiere aus Buchten (1, 1') auf ein Dosierband (6) einer Dosiervorrichtung (3) an Zutrittsstellen (2, 2') führend erfolgt und dass die Buchten (1, 1') und der Förderkanal (4) über Zutrittsmittel (7, 7', 8, 8',22, 22') verschlossen und geöffnet werden.

4. Verfahren gemäss Anspruch 3, dadurch gekennzeichnet, dass als Zutrittsmittel (7, 7', 8, 8',22, 22') Schiebetüren (7, 7'), Schiebewände (8, 8') und Schwingtüren (22, 22') verwendet werden, dass in einem Schritt die Zutrittsmitteln (7, 7', 8, 8', 22, 22') geöffnet werden und ein Zutrittsraum gebildet wird und dass in einem weiteren Schritt die Tiere einzeln und tiergerecht durch diesen Zutrittsraum geführt in den Förderkanal (4) steigen und auf dem Dosierband (6) stehen.

5. Verfahren gemäss Anspruch 1 oder 2, dadurch gekennzeichnet, dass Dosierbänder (6, 6', 6'') über eine Verzweigevorrichtung (18) verzweigt oder zusammengefasst werden, dass hierzu die Position von Tieren auf Dosierbändern (6, 6', 6'') durch Positionsbestimmungsmittel automatisch bestimmt wird, dass der Verzweigungsvorgang automatisch einleitet wird, sobald sich Tiere auf Nebendosierbändern (6', 6'') der Verzweigungsvorrichtung (18) nähern und dass hierzu Schieber (19, 19', 19'') betätigt werden und die Tiere über ein Verbindungsband (20) auf ein Hauptdosierband (6) führend geleitet werden.

6. Verfahren gemäss Anspruch 1 oder 2, dadurch gekennzeichnet, dass ein Ausrichten von um 180° verkehrt im Förderkanal (4) geförderten Tieren durch eine Wendevorrichtung vorgenommen wird, dass diese Tiere durch synchron geschaltete Wendemittel (12, 15, 17) führend gewendet werden, dass der Bewegungsraum der Tiere hierbei durch die Wendemittel (12, 15, 17) führend begrenzt wird und dass der Wendevorgang durch tiergerechte Impulse seitlich und/oder von hinten initiert wird und die Tiere um die Vorderbeine gedreht werden.

7. Verfahren gemäss Anspruch 6, dadurch gekennzeichnet, dass die Position zu wendender Tiere durch Positionsbestimmungsmittel automatisch bestimmt wird, dass der Wendevorgang automatisch einleitet wird, sobald sich solche Tiere vor der Wendevorrichtung befinden, dass als Wendemittel (12, 15, 17) zwei Schwingwände (12, 15) und eine Drehwand (17) verwendet werden, dass hierzu die erste Schwingwand (15) geöffnet und eine Drehwand (17) gewendet wird, dass dann eine zweite Schwingwand (12) geöffnet wird und dass diese zweite Schwingwand (12) die Tiere durch seitliche Impulse und/oder Impulse von hinten in den Wenderaum führt, sodass die Tiere sich auf ihren Vorderbeinen wenden und auf ein Förderband (24) steigen können, dass daraufhin die zweite Schwingwand (12) zurückgezogen und die Drehwand (17) zurückgewendet wird, dass die Drehwand (17) die Tiere durch seitliche Impulse und/oder Impulse von hinten in den Förderkanal (4) führt und dass die erste Schwingwand geschlossen wird.

8. Verfahren gemäss Anspruch 2, dadurch gekennzeichnet, dass der Bewegungsraum von auf Dosierbändern (6) in Förderkanälen (4) stehend geförderten Tieren durch Laufsperren (13) eingeschränkt wird, dass hierzu Laufsperren (13) mittels Laufbänder (14) in Förderrichtung neben den Dosierbändern (6) gefördert werden, dass die Laufsperren (13) vorgespannt sind und in Ruhestellung gegen Laufsperrenbänder (14) eingeklinkt gefördert werden und nicht in die Förderkanäle (4) ragen, dass die Laufsperren (13) an Einklinkstellen ortsfeste von aussen bewirkte Entriegelungshebel (32) in die Trajektorien der Laufsperren (13) herangeführt werden und diese aus der Ruhestellung in eine Arbeitsstellung in die Förderkanäle (4) eingeklinkt werden, sodass Tiere durch eingeklinkte Laufsperren (13) und nicht mehr auf den Dosierbändern (6) vorwärts und rückwärts laufen können und dass Vertikalteile (26) der Laufsperren (13) durch ortsfeste von aussen bewirkte Aus- und Einklinkvorrichtungen (36) aus Förderkanälen (4) ausgeklinkt werden, sodass Förderkanäle (4) mit eingeklinkten Laufsperren (13) und ausgeklinkten Vertikalteilen (26) frei gemacht und Hindernisse in den Förderkanälen (4) vermieden werden.

9. Verfahren gemäss Anspruch 2, dadurch gekennzeichnet, dass auf einem Dosierband (6) stehend geförderte Tiere über eine Übergabevorrichtung auf ein liegend förderndes brustbreites Brustband (16) vermittelt werden, dass hierzu zwei parallel zueinander laufende Fussbänder (11) mit einem schulterbreiten Dosierband (6) überlagert werden, dass die Tiere auf die Fussbänder (11) steigen, dass das Dosierband (6) entfernt wird, dass an der Übergabestelle ein Brustband (16) an die Brust der Tiere herangeführt wird und dass die Fussbänder (11) und das Brustband (16) gewinkelt zueinander geführt werden, sodass die Tiere von den Fussbändern (11) gehoben auf das Brustband (16) gelegt werden.

10. Verfahren gemäss Anspruch 2, dadurch gekennzeichnet, dass auf einem Dosierband (6) stehend geförderte Tiere über eine Übergabevorrichtung auf ein liegend förderndes brustbreites Brustband (16) vermittelt werden, dass hierzu zwei parallel zueinander laufende Fussbänder (11) mit einem schulterbreiten Dosierband (6) überlagert werden, dass die Tiere auf die Fussbänder (11) steigen, dass das Dosierband (6) entfernt wird, dass ein Brustband (16) an die Brust der Tiere herangeführt wird, dass die Fussbänder (11) und das Brustband (16) parallel zueinander geführt werden und dass an der Übergabestelle ein Absenkboden (23) unter den Fussbändern (11) in der Höhe nachgibt, sodass die Tiere dem Brustband (16) genähert und von den Fussbändern (11) auf das Brustband (16) gelegt werden.

11. Einrichtung zur Durchführung des Verfahrens gemäss Anspruch 1 oder 2, gekennzeichnet durch Zutrittstellen (2, 2') für Tiere auf eine Dosiervorrichtung (3), mit tierschulterbreiten Förderkanalwänden (5) und mit auf Tierlänge einklinkbaren Laufsperren (13), die die Tiere voneinander isolieren und den Bewegungsraum dieser Tiere auf dem Dosierband (6) einschränken, mit zwei parallel zueinander laufenden Fussbändern (11), die an einer Übergabestelle auf dem Dosierband (6) zu liegen kommen und die Tiere an dieser Übergabestelle auf die Fussbänder (11) dosieren, mit Walzen, die das Dosierband (6) entfernen und die ein Brustband (16) an die Brust der Tiere heranführen, was die Tiere von den Fussbändern (11) hebt auf das Brustband (16) legt.

12. Einrichtung gemäss Anspruch 11, dadurch gekennzeichnet, dass Zutrittstellen (2, 2') mit Zutrittsmitteln (7, 7', 8, 8',22, 22') versehen sind, die Buchten (1, 1') und den Förderkanal (4) verschliessen und öffnen und dass die Zutrittsmittel (7, 7', 8, 8',22, 22') den Zutritt der Tiere auf ein Dosierband (6) der Dosiervorrichtung (3) führend lenken.

13. Einrichtung gemäss Anspruch 11, dadurch gekennzeichnet, dass die Dosierbänder (6), die Fussbänder (11) und die Brustbänder (16) Endlosbänder sind.

14. Einrichtung gemäss Anspruch 11, dadurch gekennzeichnet, dass die Fussbänder (11) und das Brustband (16) nach der Übergabestelle gewinkelt zueinander verlaufen, dass sich das Brustband (16) der Brust der stehend gefördeten Tiere nähert und dass die Tiere nach Annäherung um Tierbeinlänge auf dem Brustband (16) zu liegen kommen.

15. Einrichtung gemäss Anspruch 11, dadurch gekennzeichnet, dass die Fussbänder (11) und das Brustband (16) in einer parallel verlaufen und dass ein Absenkboden (23) unter den Fussbändern (11) in Richtung Boden nachgibt, sodass die Tiere auf das Brustband (16) zu liegen kommen.

16. Einrichtung gemäss Anspruch 11, dadurch gekennzeichnet, dass zur tierspezifischen Anpassung der Höhe Brustbandes (16) an die Beinhöhe der geförderten Tiere, die Höhe des Drehpunktes einer Umkehrwalze des Brustbandes (16) an der zweiten Übergabestelle in seiner Position bezüglich derjenigen einer Umkehrwalze des Dosierbandes 6 veränderbar ist.

17. Einrichtung gemäss Anspruch 11, dadurch gekennzeichnet, dass eine Dosiervorrichtung (3) die Tiere in verspiegelten, die Tiere ablenkenden Förderkanalwänden (5) fördert und dass massierende Bürsten und akustische Signalgeber die Tiere beruhigen.

18. Einrichtung gemäss Anspruch 11, dadurch gekennzeichnet, dass Entriegelungshebel (32) an Einklinkstellen in die Trajektoren der an Laufsperrenbändern (14) geförderten Laufsperren (13) vor- und rückfahrbar sind, dass diese Bewegung der Entriegelungshebel (32) um eine Entriegelungsdistanz auf Entriegelungsnocken (21) oder Zahnsegmente (43) der Laufsperren (13) wirken und die Laufsperren (13) aus einer Ruhestellung in eine Arbeitsstellung einklinkt.

19. Einrichtung gemäss Anspruch 11, dadurch gekennzeichnet, dass Laufsperren (13) mit vorgespannten Rasterstiften (33) gearbeitet sind, dass diese Rasterstifte (33) mit Ausklinkern (34) entspannbar sind und dass die Ausklinker (34) die in Arbeitsstellung eingeklinkten Laufsperren (13) in eine Ruhestellung ausklinken.

20. Einrichtung gemäss Anspruch 11, dadurch gekennzeichnet, dass Vertikalteile (26) von Laufsperren (13) vorgespannt gearbeitet sind, dass die Vertikalteile (26) der in Arbeitsstellung eingeklinkten Laufsperren (13) mit Aus- und Einklinkvorrichtungen (36) entspannbar und spannbar sind und dass die Aus- und Einklinkvorrichtungen (36) die Vertikalteile (26) durch Entspannen und Spannen ein- und ausklinken, wobei die Laufsperren (13) in Arbeitsstellung eingeklinkt sind.

21. Wendevorrichtung zur Durchführung des Verfahrens gemäss Anspruch 1 oder 2, dadurch gekennzeichnet, dass Wendemittel (12, 15, 17) synchron geschaltet sind und um 180° verkehrt ausgerichtet im Förderkanal (4) geförderte Tiere führend wenden, dass Wendemittel (12, 15, 17) den Bewegungsraum der Tiere dabei führend begrenzen und dass Wendemittel (12, 15, 17) den Wendevorgang durch tiergerechte Impulse seitlich und/oder von hinten initieren, sodass sich die Tiere um die Vorderbeine drehen.

22. Wendevorrichtung gemäss Anspruch 21, dadurch gekennzeichnet, dass Positionsbestimmungsmittel die Position zu wendender Tiere automatisch bestimmen, dass der Wendevorgang automatisch beginnt, sobald sich solche Tiere vor der Wendevorrichtung befinden, dass die Wendemittel (12, 15, 17) zwei Schwingwände (12, 15) und eine Drehwand (17) sind, dass sich die erste Schwingwand (15) öffnet und sich die Drehwand (17) wendet, dass sich dann die zweite Schwingwand (12) öffnet und dass seitliche Impulse und/oder Impulse von hinten der zweiten Schwingwand (12) die Tiere in den Wenderaum führen, sodass die Tiere sich auf ihren Vorderbeinen wenden und auf ein Förderband (24) steigen können, dass sich daraufhin die zweite Schwingwand (12) zurückzieht und die Drehwand (17) zurückwendet, seitliche Impulse und/oder Impulse von hinten der Drehwand (17) die Tiere in den Förderkanal (4) führen und dass sich die erste Schwingwand schliesst.

23. Dosiervorrichtung zur Durchführung des Verfahrens gemäss Anspruch 1, gekennzeichnet durch Zutrittstellen (2, 2') für Tiere auf eine Dosiervorrichtung (3), mit tierschulterbreiten Förderkanalwänden (5) und mit auf Tierlänge einklinkbaren Laufsperren (13), die die Tiere voneinander isolieren und den Bewegungsraum dieser Tiere auf dem Dosierband (6) einschränken.

24. Dosiervorrichtung gemäss Anspruch 23, dadurch gekennzeichnet, dass Zutrittstellen (2, 2') mit Zutrittsmitteln (7, 7', 8, 8',22, 22') versehen sind, die Buchten (1, 1') und den Förderkanal (4) verschliessen und öffnen und dass die Zutrittsmittel (7, 7', 8, 8',22, 22') den Zutritt der Tiere auf ein Dosierband (6) der Dosiervorrichtung (3) führend lenken.

25. Dosiervorrichtung gemäss Anspruch 23, dadurch gekennzeichnet, dass eine Dosiervorrichtung (3) die Tiere in verspiegelten, die Tiere ablenkenden Förderkanalwänden (5) fördert und dass massierende Bürsten und akustische Signalgeber die Tiere beruhigen.

26. Dosiervorrichtung gemäss Anspruch 23, dadurch gekennzeichnet, dass Entriegelungshebel (32) an Einklinkstellen in die Trajektoren der an Laufsperrenbändern (14) geförderten Laufsperren (13) vor- und rückfahrbar sind, dass diese Bewegung der Entriegelungshebel (32) um eine Entriegelungsdistanz auf Entriegelungsnocken (21) oder Zahnsegmente (43) der Laufsperren (13) wirken und die Laufsperren (13) aus einer Ruhestellung in eine Arbeitsstellung einklinkt.

27. Dosiervorrichtung gemäss Anspruch 23, dadurch gekennzeichnet, dass Laufsperren (13) mit vorgespannten Rasterstiften (33) gearbeitet sind, dass diese Rasterstifte (33) mit Ausklinkern (34) entspannbar sind und dass die Ausklinker (34) die in Arbeitsstellung eingeklinkten Laufsperren (13) in eine Ruhestellung ausklinken.

28. Dosiervorrichtung gemäss Anspruch 23, dadurch gekennzeichnet, dass Vertikalteile (26) von Laufsperren (13) vorgespannt gearbeitet sind, dass die Vertikalteile (26) der in Arbeitsstellung eingeklinkten Laufsperren (13) mit Aus- und Einklinkvorrichtungen (36) entspannbar und spannbar sind und dass die Aus- und Einklinkvorrichtungen (36) die Vertikalteile (26) durch Entspannen und Spannen ein- und ausklinken, wobei die Laufsperren (13) in Arbeitsstellung eingeklinkt sind.

29. Verzweigungsvorrichtung zur Durchführung des Verfahrens gemäss Anspruch 1 oder 2, dadurch gekennzeichnet, dass eine Verzweigevorrichtung (18) Dosierbänder (6, 6', 6'') verzweigt oder zusammenfasst, wozu sie die Position von Tieren auf Dosierbändern (6, 6', 6'') durch Positionsbestimmungsmittel automatisch bestimmt und den Verzweigungsvorgang automatisch einleitet, sobald sich Tiere auf Nebendosierbändern (6', 6'') der Verzweigungsvorrichtung (18) nähern und wozu sie Schieber (19, 19', 19'') betätigt und die Tiere über ein Verbindungsband (20) auf ein Hauptdosierband (6) führend leitet.

## Claims

1. Process for conveying animals in an appropriate manner, animals being conveyed in conveying channels (4) in a state in which they are lined up on unit-feed belts (6), characterized in that the animals are conveyed in a state in which they are separated from one another by separating means (39), and in that, in following process steps, they are conveyed on chest-supporting belts (16).

2. Process according to Claim 1, characterized in that the animals are conveyed in lined-up formation in a standing position in a state in which they are separated from one another by separating means (39) in the form of barriers (13).

3. Process according to Claim 1 or 2, characterized in that access of the animals from enclosures (1, 1') onto a unit-feed belt (6) of a unit-feed arrangement (3) takes place in a guided manner at access points (2, 2'), and in that the enclosures (1, 1') and the conveying channel (4) are closed and opened via access means (7, 7'' 8, 8', 22, 22').

4. Process according to Claim 3, characterized in that the access means (7, 7', 8, 8', 22, 22') used are sliding doors (7, 7'), sliding walls (8, 8') and swing doors (22, 22'), in that, in one step, the access means (7, 7', 8, 8', 22, 22') are opened and an access space is formed, and in that, in a further step, the animals pass individually and appropriately, guided by said access space, into the conveying channel (4) and stand on the unit-feed belt (6).

5. Process according to Claim 1 or 2, characterized in that unit-feed belts (6, 6', 6'') are branched or brought together via a branching arrangement (18), in that, for this purpose, the position of animals on unit-feed belts (6, 6', 6'') is determined automatically by position-determining means, in that the branching operation is initiated automatically as soon as animals on secondary unit-feed belts (6', 6'') approach the branching arrangement (18), and in that, for this purpose, slides (19, 19', 19'') are actuated and the animals are directed onto a main unit-feed belt (6) in a guided manner via a connecting belt (20).

6. Process according to Claim 1 or 2, characterized in that alignment of animals which are conveyed in the conveying channel (4) in a state in which they are turned 180° the wrong way is carried out by a turning arrangement, in that said animals are turned in a guided manner by synchronously switched turning means (12, 15, 17), in that the movement space for the animals is delimited, with guiding action, by the turning means (12, 15, 17), and in that the turning operation is initiated by pulses which are appropriate for animals and come from the sides and/or from the rear, and the animals are turned around their front legs.

7. Process according to Claim 6, characterized in that the position of animals which are to be turned is determined automatically by position-determining means, in that the turning operation is initiated automatically as soon as such animals are located in front of the turning arrangement, in that the turning means (12, 15, 17) used are two swing-action walls (12, 15) and a rotary wall (17), in that, for this purpose, the first swing-action wall (15) is opened and a rotary wall (17) is turned, in that a second swing-action wall (12) is then opened, and in that said second swing-action wall (12) guides the animals into the turning space by lateral pulses and/or pulses from the rear, with the result that the animals turn on their front legs and can pass onto a conveying belt (24), in that the second swing-action wall (12) is then drawn back and the rotary wall (17) is turned back, in that the rotary wall (17) guides the animals into the conveying channel (4) by lateral pulses and/or pulses from the rear, and in that the first swing-action wall is closed.

8. Process according to Claim 2, characterized in that the movement space for animals conveyed in conveying channels (4) in a standing position on unit-feed belts (6) is limited by barriers (13), in that, for this purpose, barriers (13) are conveyed in a conveying direction alongside the unit-feed belts (6) by means of barrier belts (14), in that the barriers (13) are prestressed and, in the rest position, are conveyed in a state in which they are latched in barrier belts (14) and do not project into the conveying channels (4), in that, at latch-in points, stationary unlocking levers (32) which are activated from the outside are advanced into the trajectories of the barriers (13) and the latter are latched from the rest position into an operating position in the conveying channels (4), with the result that animals are limited by latched-in barriers (13) and are no longer able to move forwards and backwards on the unit-feed belts (6), and in that vertical parts (26) of the barriers (13) are unlatched from conveying channels (4) by stationary unlatching and latching devices (36) which are activated from the outside, this freeing conveying channels (4) with latched-in barriers (13) and unlatched vertical parts (26) and avoiding obstructions in the conveying channels (4).

9. Process according to Claim 2, characterized in that animals conveyed in a standing position on a unit-feed belt (6) are passed, via a transfer arrangement, onto a chest-width chest-supporting belt (16) which conveys the animals in a lying position, in that, for this purpose, two mutually parallel foot-supporting belts (11) are made to coincide with a shoulder-width unit-feed belt (6), in that the animals pass onto the foot-supporting belts (11), in that the unit-feed belt (6) is removed, in that, at the transfer point, a chest-supporting belt (16) is advanced up to the chest of the animals, and in that the foot-supporting belts (11) and the chest-supporting belt (16) are guided at an angle with respect to one another, with the result that the animals are raised from the foot-supporting belts (11) and laid on the chest-supporting belt (16).

10. Process according to Claim 2, characterized in that animals conveyed in a standing position on a unit-feed belt (6) are passed, via a transfer arrangement, onto a chest-width chest-supporting belt (16) which conveys the animals in a lying position, in that, for this purpose, two mutually parallel foot-supporting belts (11) are made to coincide with the shoulder-width unit-feed belt (6), in that the animals pass onto the foot-supporting belts (11) in that the unit-feed belt (6) is removed, in that a chest-supporting belt (16) is advanced up to the chest of the animals, in that the foot-supporting belts (11) and the chest-supporting belt (16) are guided parallel to one another, and in that, at the transfer point, a lowering floor (23) beneath the foot-supporting belts (11) yields vertically, with the result that the animals are advanced towards the chest-supporting belt (16) and are laid on the chest-supporting belt (16) by the foot-supporting belts (11).

11. Apparatus for carrying out the process according to Claim 1 or 2, characterized by animal-access points (2, 2') to a unit-feed arrangement (3), having animal-shoulder-width conveying-channel walls (5) and having barriers (13) which can be latched into place to correspond to the length of the animals, separate the animals from one another and limit the movement space for these animals on the unit-feed belt (6), having two mutually parallel foot-supporting belts (11) which, at a transfer point, come to lie on the unit-feed belt (6) and, at this transfer point, feed the animals one by one onto the foot-supporting belts (11), having rollers which remove the unit-feed belt (6) and advance a chest-supporting belt (16) up to the chest of the animals, this raising the animals from the foot-supporting belts (11) and laying them on the chest-supporting belt (16).

12. Apparatus according to Claim 11, characterized in that access points (2, 2') are provided with access means (7, 7', 8, 8', 22, 22') which close and open enclosures (1, 1') and the conveying channel (4), and in that the access means (7, 7', 8, 8', 22, 22') direct, with guiding action, the access of the animals to a unit-feed belt (6) of the unit-feed arrangement (3).

13. Apparatus according to Claim 11, characterized in that the unit-feed belts (6), the foot-supporting belts (11) and the chest-supporting belts (16) are endless belts.

14. Apparatus according to Claim 11, characterized in that the foot-supporting belts (11) and the chest-supporting belt (16) run at an angle with respect to one another after the transfer point, in that the chest-supporting belt (16) advances up to the chest of the animals conveyed in a standing position, and in that, once it has been advanced by a leg length, the animals come to lie on the chest-supporting belt (16).

15. Apparatus according to Claim 11, characterized in that the foot-supporting belts (11) and the chest-supporting belt (16) run parallel, and in that a lowering floor (23) beneath the foot-supporting belts (11) yields in the direction of the floor, with the result that the animals come to lie on the chest-supporting belt (16).

16. Apparatus according to Claim 11, characterized in that, for animal-specific adaptation of the height of the chest-supporting belt (16) to the leg height of the animals conveyed, the height of the pivot point of a reversing roller of the chest-supporting belt (16) at the second transfer point can be changed in position with respect to that of a reversing roller of the unit-feed belt (6).

17. Apparatus according to Claim 11, characterized in that a unit-feed arrangement (3) conveys the animals in conveying-channel walls (15) which have a reflective coating and distract the animals, and in that massaging brushes and acoustic signal generators pacify the animals.

18. Apparatus according to Claim 11, characterized in that, at latch-in points, unlocking levers (32) can be moved back and forth into the trajectories of the barriers (13) conveyed on barrier belts (14), in that this movement of the unlocking levers (32) by an unlocking distance acts on unlocking cams (21) or toothed segments (43) of the barriers (13) and latches the barriers (13) from a rest position into an operating position.

19. Apparatus according to Claim 11, characterized in that barriers (13) are made with prestressed latching pins (33), in that said latching pins (33) can be relieved of stressing by unlatching means (34), and in that the unlatching means (34) unlatch into a rest position the barriers (13) which are latched in the operating position.

20. Apparatus according to Claim 11, characterized in that vertical parts (26) of barriers (13) are made to be prestressed, in that the vertical parts (26) of the barriers (13) latched in the operating position can be relieved of stressing and subjected to stressing by unlatching and latching devices (36), and in that the unlatching and latching devices (36) latch the vertical parts (26) into place and unlatch them by relieving them of stressing and subjecting them to stressing, the barriers (13) being latched in the operating position.

21. Turning arrangement for carrying out the process according to Claim 1 or 2, characterized in that turning means (12, 15, 17) are switched synchronously and turn, with guiding action, animals which are conveyed in the conveying channel (4) in a state in which they are turned 180° the wrong way, in that turning means (12, 15, 17) delimit, with guiding action, the movement space for the animals, and in that turning means (12, 15, 17) initiate the turning operation by pulses which are appropriate for animals and come from the sides and/or from the rear, with the result that the animals turn around their front legs.

22. Turning arrangement according to Claim 21, characterized in that position-determining means automatically determine the position of animals which are to be turned, in that the turning operation begins automatically as soon as such animals are located in front of the turning arrangement, in that the turning means (12, 15, 17) are two swing-action walls (12, 15) and a rotary wall (17), in that the first swing-action wall (15) opens and the rotary wall (17) turns, in that the second swing-action wall (12) then opens, and in that lateral pulses and/or pulses from the rear, of the second swing-action wall (12), guide the animals into the turning space, with the result that the animals turn on their front legs and can pass onto a conveying belt (24), in that the second swing-action wall (12) then draws back and the rotary wall (17) turns back, lateral pulses and/or pulses from the rear, of the rotary wall (17), guide the animals into the conveying channel (4), and in that the first swing-action wall closes.

23. Unit-feed arrangement for carrying out the process according to Claim 1, characterized by animal-access points (2, 2') to a unit-feed arrangement (3), having animal-shoulder-width conveying-channel walls (5) and having barriers (13) which can be latched into place to correspond to the length of the animals, separate the animals from one another and limit the movement space for these animals on the unit-feed belt (6).

24. Unit-feed arrangement according to Claim 23, characterized in that access points (2, 2') are provided with access means (7, 7', 8, 8', 22, 22') which close and open enclosures (1, 1') and the conveying channel (4), and in that the access means (7, 7', 8, 8', 22, 22') direct, with guiding action, the access of the animals to a unit-feed belt (6) of the unit-feed arrangement (3).

25. Unit-feed arrangement according to Claim 23, characterized in that a unit-feed arrangement (3) conveys the animals in conveying-channel walls (5) which have a reflective coating and distract the animals, and in that massaging brushes and acoustic signal generators pacify the animals.

26. Unit-feed arrangement according to Claim 23, characterized in that, at latch-in points, unlocking levers (32) can be moved back and forth into the trajectories of the barriers (13) conveyed on barrier belts (14), in that this movement of the unlocking levers (32) by an unlocking distance acts on unlocking cams (21) or toothed segments (43) of the barriers (13) and latches the barriers (13) from a rest position into an operating position.

27. Unit-feed arrangement according to Claim 23, characterized in that barriers (13) are made with prestressed latching pins (33), in that said latching pins (33) can be relieved of stressing by unlatching means (34), and in that the unlatching means (34) unlatch into a rest position the barriers (13) which are latched in the operating position.

28. Unit-feed arrangement according to Claim 23, characterized in that vertical parts (26) of barriers (33) are made to be prestressed, in that the vertical parts (26) of the barriers (13) latched in the operating position can be relieved of stressing and subjected to stressing by unlatching and latching devices (36), and in that the unlatching and latching devices (36) latch the vertical parts (26) into place and unlatch them by relieving them of stressing and subjecting them to stressing, the barriers (13) being latched in the operating position.

29. Branching arrangement for carrying out the process according to Claim 1 or 2, characterized in that a branching arrangement (18) branches or brings together unit-feed belts (6, 6', 6''), for which purpose it automatically determines the position of animals on unit-feed belts (6, 6', 6'') by position-determining means and automatically initiates the branching operation as soon as animals on secondary unit-feed belts (6', 6'') approach the branching arrangement (18) and, for which purpose, it actuates slides (19, 19', 19'') and directs the animals onto a main unit-feed belt (6) in a guided manner via a connecting belt (20).

## Revendications

1. Procédé pour le transport adapté aux animaux, dans lequel des animaux sont transportés dans des couloirs de transport (4), alignés en une file, sur des bandes doseuses (6), caractérisé en ce que les animaux sont transportés en étant séparés les uns des autres par des moyens séparateurs (39) et en ce que, dans les étapes suivantes du procédé, ils sont transportés sur des bandes de poitrail (16).

2. Procédé selon la revendication 1, caractérisé en ce que les animaux sont transportés en files, en étant séparés les uns des autres par des moyens séparateurs (39) présentant la forme de barrières mobiles (13).

3. Procédé selon la revendication 1 ou 2, caractérisé en ce que l'entrée des animaux, à la sortie de baies (1, 1'), sur une bande doseuse (6) appartenant à un dispositif doseur (3) s'effectue avec guidage au droit de zones d'entrée (2, 2') et en ce que les baies (1, 1') et le couloir de transport (4) sont fermés et ouverts à l'aide de moyens d'entrée (7, 7', 8, 8',22, 22').

4. Procédé selon la revendication 3, caractérisé en ce qu'on utilise, comme moyens d'entrée (7, 7', 8, 8', 22, 22'), des portes coulissantes (7, 7'), des parois coulissantes (8, 8') et des portes pivotantes (22, 22'), en ce que, dans une étape, les moyens d'entrée (7, 7', 8, 8', 22, 22') sont ouverts et qu'il se forme une chambre d'entrée et en ce que, dans une autre étape, les animaux montent dans le couloir de transport (4) individuellement et avec guidage à travers cette chambre d'entrée de façon adaptée aux animaux, et se tiennent alors debout sur la bande doseuse (6).

5. Procédé selon la revendication 1 ou 2, caractérisé en ce que les bandes doseuses (6, 6', 6 '') se ramifient ou se rassemblent au moyen d'un dispositif d'aiguillage (18), en ce qu'à cet effet, la position des animaux sur les bandes doseuses (6, 6', 6'') est détectée automatiquement par des moyens de détection de la position, en ce que l'opération d'aiguillage est déclenchée automatiquement dès que des animaux situés sur des bandes doseuses adjacentes (6', 6'') se rapprochent du dispositif d'aiguillage (18) et en ce qu'à cet effet, des vannes (19, 19', 19'') sont actionnées et les animaux sont conduits avec guidage sur une bande doseuse principale (6) au moyen d'une bande de liaison (20).

6. Procédé selon la revendication 1 ou 2, caractérisé en ce qu'un alignement d'animaux transportés dans le couloir de transport (4) dans un sens inversé de 180° est assuré par un dispositif de retournement, en ce que ces animaux sont retournés avec guidage par des moyens de retournement (12, 15, 17) actionnés de façon synchrone, en ce que l'espace de mouvement libre des animaux est limité avec guidage par les moyens de retournement (12, 15, 17) et en ce que le processus de retournement est déclenché latéralement et/ou de l'arrière par des impulsions adaptées aux animaux et les animaux sont retournés autour de leur pattes antérieures.

7. Procédé selon la revendication 6, caractérisé en ce que la position des animaux à retourner est détectée automatiquement par des moyens de détection de la position, en ce que l'opération de retournement est déclenchée automatiquement dès que ces animaux se trouvent devant le dispositif de retournement, en ce qu'on utilise comme moyens de retournement (12, 15, 17) deux parois pivotantes (12, 15) et une paroi tournante (17) en ce qu'à cet effet, la première paroi pivotante (15) est ouverte et une paroi tournante (17) est tournée, ensuite une deuxième paroi pivotante (12) est ouverte et en ce que cette deuxième paroi pivotante (12) guide les animaux dans la chambre de retournement, par des impulsions latérales et/ou des impulsions de l'arrière, de sorte que les animaux se retournent sur leurs pattes antérieures et peuvent monter sur une bande transporteuse (24), en ce qu'ensuite, la deuxième paroi pivotante (12) est ramenée en arrière et la paroi tournante (17) est tournée en sens inverse, en ce que la paroi tournante (17) conduit les animaux dans le couloir de transport (4) par des impulsions latérales et/ou des impulsions de l'arrière et en ce que la première paroi pivotante est fermée.

8. Procédé selon la revendication 2, caractérisé en ce que l'espace de mouvement libre d'animaux transportés debout sur des bandes doseuses (6) dans des couloirs de transport (4) est restreint par des barrières mobiles (13), en ce qu'à cet effet, des barrières mobiles (13) sont transportées au moyen de bandes mobiles (14) dans la direction de transport à côté des bandes doseuses (6), en ce que les barrières mobiles (13) sont précontraintes et, en position de repos, sont transportées encliquetées contre les bandes mobiles (14) des barrières et ne sont pas engagées dans les couloirs de transport (4), en ce que, dans des zones d'encliquetage, les barrières mobiles (13) sont engagées dans les trajectoires des barrières mobiles (13), par des leviers de déverrouillage (32) fixes en position et actionnés de l'extérieur, les barrières sont encliquetées de la position de repos dans une position de travail dans les couloirs de transport (4), de sorte que les animaux sont retenus par des barrières mobiles (13) encliquetées et ne peuvent plus avancer ni reculer sur les bandes doseuses (6), et en ce que des parties verticales (26) des barrières mobiles (13) sont libérées des couloirs de transport (4) par des dispositifs de libération et d'encliquetage (36) fixes et actionnés de l'extérieur, de sorte que les couloirs de transport (4) dans lesquels les barrières mobiles (13) sont encliquetées et les parties verticales (26) libérées sont dégagées et que les obstacles dans les couloirs de transport (4) sont supprimés.

9. Procédé selon la revendication 2, caractérisé en ce que des animaux transportés debout sur une bande doseuse (6) sont transférés, au moyen d'un dispositif de transfert, sur une bande de poitrail (16) de la largeur du poitrail, qui les transporte en position couchée, en ce qu'à cet effet, deux bandes de pieds (11) circulant parallèlement entre elles sont surmontées d'une bande doseuse (6) de la largeur des épaules, en ce que les animaux montent sur les bandes de pieds (11), que la bande doseuse (6) est éloignée et que dans la zone de transfert, une bande de poitrail (16) est amenée contre le poitrail des animaux et en ce que les bandes de pieds (11) et la bande de poitrail (16) sont guidées de façon à former un angle entre elles de sorte que les animaux sont soulevés au-dessus des bandes de pieds (11) et couchés sur la bande de poitrail (16).

10. Procédé selon la revendication 2, caractérisé en ce que des animaux transportés debout sur une bande doseuse (6) sont transférés, au moyen d'un dispositif de transfert, sur une bande de poitrail (16) de la largeur du poitrail, qui les transporte en position couchée, en ce qu'à cet effet, deux bandes de pieds (11) circulant parallèlement entre elles sont surmontées d'une bande doseuse (6) de la largeur des épaules, en ce que les animaux montent sur les bandes de pieds (11), en ce que la bande doseuse (6) est éloignée, en ce qu'une bande de poitrail (16) est amenée contre le poitrail des animaux, en ce que les bandes de pieds (11) et la bande de poitrail (16) sont guidées parallèlement entre elles, et en ce que, dans la zone de transfert, un plancher abaissable (23) cède en hauteur au-dessous des bandes de pieds (11), de sorte que les animaux sont rapprochés de la bande de poitrail (16) et abaissés des bandes de pieds (11) sur la bande de poitrail (16).

11. Dispositif pour la mise en oeuvre du procédé selon la revendication 1 ou 2, caractérisé par des zones d'entrée (2, 2') des animaux sur un dispositif de dosage (3), comprenant des parois (5) du couloir de transport qui sont espacées de la largeur des épaules d'un animal et possédant des barrières mobiles (13) qui peuvent être encliquetées à la longueur des animaux et qui isolent les animaux les uns des autres et limitent l'espace de mouvement libre de ces animaux sur la bande doseuse (6), comprenant aussi deux bandes de pieds (11) qui circulent parallèlement entre elles, qui viennent se poser sur la bande doseuse (6) dans une zone de transfert et dosent les animaux sur les bandes de pieds (11) dans cette zone de transfert, ainsi que des rouleaux qui éloignent la bande doseuse (6) et qui amènent une bande de poitrail (16) contre le poitrail des animaux, ce qui soulève les animaux au-dessus des bandes de pieds (11) et les dépose sur la bande de poitrail (16).

12. Dispositif selon la revendication 11, caractérisé en ce que des zones d'entrée (2, 2') sont munies de moyens d'entrée (7, 7', 8, 8', 22, 22'), qui ferment et ouvrent les baies (1, 1') et le couloir de transport (4) et en ce que les moyens d'entrée (7, 7', 8, 8', 22, 22') dévient l'entrée des animaux sur une bande transporteuse (6) du dispositif de dosage (3) avec guidage.

13. Dispositif selon la revendication 11, caractérisé en ce que les bandes doseuses (6), les bandes de pieds (11) et les bandes de poitrail (16) sont des bandes sans fin.

14. Dispositif selon la revendication 11, caractérisé en ce que les bandes de pieds (11) et la bande de poitrail (16) s'étendent en formant un angle entre elles en aval de la zone de transfert, en ce que la bande de poitrail (16) se rapproche du poitrail des animaux transportés debout et en ce qu'après un rapprochement d'une distance égale à la longueur des pattes des animaux, les animaux viennent se déposer sur la bande de poitrail (16).

15. Dispositif selon la revendication 11, caractérisé en ce que les bandes de pieds (11) et la bande de poitrail (16) circulent parallèlement et en ce qu'un plancher abaissable (23) cède sous les bandes de pieds (11) en direction du sol, de sorte que les animaux viennent se déposer sur la bande de poitrail (16).

16. Dispositif selon la revendication 11, caractérisé en ce que, pour l'adaptation, spécifique aux animaux, de la hauteur de la bande de poitrail (16) à la longueur des pattes des animaux transportés, la hauteur du point de rotation d'un rouleau de renvoi de la bande de poitrail (16) dans la deuxième zone de transfert peut être modifiée en position par rapport à la position d'un rouleau de renvoi de la bande doseuse (6).

17. Dispositif selon la revendication 11, caractérisé en ce qu'un dispositif doseur (3) transporte les animaux dans des parois (5) du couloir de transport qui sont rendues réfléchissantes et dévient les animaux, et en ce que des brosses massantes et des générateurs de signaux acoustiques calment les animaux.

18. Dispositif selon la revendication 11, caractérisé en ce que des leviers de déverrouillage (32) situés aux points d'encliquetage peuvent être avancés et reculés dans les trajectoires des barrières mobiles (13) transportées le long de bandes (14) de barrières mobiles, en ce que ce mouvement des leviers de déverrouillage (32) sur une distance de déverrouillage agit sur des cames de déverrouillage (21) ou des secteurs dentés (43) des barrières mobiles (13) et encliquette les barrières mobiles (13) d'une position de repos dans une position de travail.

19. Dispositif selon la revendication 11, caractérisé en ce que des barrières mobiles (13) sont munies de chevilles d'arrêt précontraintes (33), en ce que ces chevilles d'arrêt (33) peuvent être détendues à l'aide de déclencheurs (34) et en ce que les déclencheurs (34) libèrent les barrières mobiles (13) antérieurement encliquetées en position de travail pour les faire revenir dans une position de repos.

20. Dispositif selon la revendication 11, caractérisé en ce que des parties verticales (26) de barrières mobiles (13) sont agencées précontraintes, en ce que les parties verticales (26) des barrières mobiles (13) encliquetées dans la position de travail peuvent être détendues et tendues au moyen de dispositifs de libération et d'encliquetage (36) et en ce que les dispositifs de libération et d'encliquetage (36) encliquettent et libèrent les parties verticales (26) par détente et tension, les barrières mobiles (13) étant encliquetées en position de travail.

21. Dispositif de retournement pour la mise en oeuvre du procédé selon la revendication 1 ou 2, caractérisé en ce que des moyens de retournement (12, 15, 17) sont commandés en synchronisme et retournent avec guidage les animaux transportés dans le couloir de transport (4) orientés dans une direction inversée de 180°, en ce que les moyens de retournement (12, 15, 17) limitent l'espace de mouvement libre des animaux avec guidage et en ce que les moyens de retournement (12, 15, 17) déclenchent le processus de retournement par des impulsions adaptées aux animaux, latéralement et/ou de l'arrière, de sorte que les animaux tournent sur leur pattes antérieures.

22. Dispositif de retournement selon la revendication 21, caractérisé en ce que des moyens de détection de la position détectent automatiquement la position des animaux à retourner, en ce que le processus de retournement commence automatiquement dès que ces animaux se trouvent devant le dispositif de retournement, en ce que les moyens de retournement (12, 15, 17) sont deux parois pivotantes (12, 15) et une paroi tournante (17), en ce que la première paroi pivotante (15) s'ouvre et que la paroi tournante (17) tourne, en ce qu'ensuite, la deuxième paroi pivotante (12) s'ouvre et en ce que des impulsions latérales et/ou des impulsions de l'arrière de la deuxième paroi pivotante (12) guident les animaux dans la chambre de retournement, de sorte que les animaux peuvent se tourner sur leurs pattes antérieures et monter sur une bande transporteuse (24), en ce qu'ensuite, la deuxième paroi pivotante (12) se rétracte et la paroi tournante (17) tourne en sens inverse, des impulsions latérales et/ou des impulsions de l'arrière de la paroi tournante (17) guident les animaux dans le couloir de transport (4) et en ce que la première paroi pivotante se ferme.

23. Dispositif doseur pour la mise en oeuvre du procédé selon la revendication 1, caractérisé par des zones d'entrée (2, 2') pour les animaux sur un dispositif doseur (3), comprenant des parois (5) du couloir de transport espacées de la largeur des épaules des animaux et des barrières mobiles (13) qui peuvent être encliquetées à la longueur des animaux, isolent les animaux les uns des autres et limitent l'espace de mouvement libre des animaux sur la bande doseuse (6).

24. Dispositif doseur selon la revendication 23, caractérisé en ce que les zones d'entrée (2, 2') sont munies de moyens d'entrée (7, 7', 8, 8', 22, 22'), qui ferment et ouvrent les baies (1, 1') et le couloir de transport (4), et en ce que les moyens d'entrée (7, 7', 8, 8', 22, 22') dévient l'entrée des animaux sur une bande doseuse (6) des dispositifs doseurs (3) avec guidage.

25. Dispositif doseur selon la revendication 23, caractérisé en ce qu'un dispositif doseur (3) transporte les animaux dans des parois (5) du couloir de transport qui sont rendues réfléchissantes et dévient les animaux, et en ce que des brosses de massage et des générateurs de signaux acoustiques calment les animaux.

26. Dispositif doseur selon la revendication 23, caractérisé en ce que des leviers de déverrouillage (32) placés dans les zones d'encliquetage peuvent être avancés et reculés dans les trajectoires des barrières mobiles (13) transportées le long de bandes (14) de barrières mobiles, en ce que ce mouvement des leviers de déverrouillage (32) sur une distance de déverrouillage agit sur des cames de déverrouillage (21) ou des secteurs dentés (43) des barrières mobiles (13) et encliquette les barrières mobiles (13) d'une position de repos dans une position de travail.

27. Dispositif doseur selon la revendication 23, caractérisé en ce que des barrières mobiles (13) sont munies de chevilles d'arrêt précontraintes (33), en ce que ces chevilles d'arrêt (33) peuvent être détendues à l'aide de déclencheurs (34) et en ce que les déclencheurs (34) libèrent les barrières mobiles (13) précédemment encliquetées en position de travail pour les faire revenir dans une position de repos.

28. Dispositif doseur selon la revendication 23, caractérisé en ce que des parties verticales (26) de barrières mobiles (13) sont agencées précontraintes, en ce que les parties verticales (26) des barrières mobiles (13) encliquetées dans la position de travail peuvent être détendues et tendues au moyen de dispositifs de libération et d'encliquetage et en ce que les dispositifs de libération et d'encliquetage (36) encliquettent et libèrent les parties verticales (26) par détente et tension, les barrières mobiles (13) étant encliquetées en position de travail.

29. Dispositif d'aiguillage pour la mise en oeuvre du procédé selon la revendication 1 ou 2, caractérisé en ce qu'un dispositif d'aiguillage (18) ramifie et rassemble les bandes doseuses (6, 6', 6''), ce pourquoi il détecte automatiquement la position des animaux sur les bandes doseuses (6, 6', 6'') à l'aide de moyens de détection de la position et provoque automatiquement l'opération d'aiguillage dès que des animaux situés sur des bandes doseuses adjacentes (6', 6'') se rapprochent du dispositif d'aiguillage (18), et ce pourquoi il actionne des vannes (19, 19', 19'') et conduit les animaux sur une bande doseuse principale (6) avec guidage en passant sur une bande de liaison (20).
